# EUROPÄISCHE PATENTSCHRIFT

(11) **EP 1 433 687 B1**
(45) Veröffentlichungstag und Bekanntmachung des Hinweises auf die Patenterteilung: **15.03.2006**
(21) Anmeldenummer: 03026752.0
(22) Anmeldetag: 21.11.2003
(51) Int. Cl.: B62D 1/184, B62D 1/19, B62D 1/18

(54) **Lenksäule**
Steering column
Colonne de direction

(30) Priorität: 23.12.2002 DE 10261538
(43) Veröffentlichungstag der Anmeldung: 30.06.2004
(73) Patentinhaber: ThyssenKrupp Presta AG, 9492 Eschen (LI)
(72) Erfinder: Klukowski, Christoph, Dr., 8880 Walenstadt (CH); Galehr, Robert, A-6713 Ludesch (AT); Bertsch, Reinhard, A-6832 Röthis (AT); Umberg, Reto, CH-8890 Flums (CH); Breuss, Hubert, A-6805 Gisingen (AT); Lutz, Christian, Ing., A-6714 Nüziders (AT)
(74) Vertreter: Hefel, Herbert

(56) Entgegenhaltungen:
- EP-A- 0 802 104
- EP-A- 1 093 990

## Beschreibung

Die Erfindung betrifft eine verstellbare Lenksäule mit einer Lenkspindel, einer die Lenkspindel lagernden Manteleinheit, einer chassisfesten Konsoleneinheit mit mindestens einer Seitenwange, die sich seitlich der Manteleinheit erstreckt und die Manteleinheit trägt, und einer öffen- und schließbaren Feststelleinrichtung, in deren geschlossenem Zustand die Manteleinheit mit der Konsoleneinheit durch miteinander in Eingriff stehende Feststellelemente unverstellbar verbunden ist und in deren geöffnetem Zustand die Manteleinheit gegenüber der Konsoleneinheit zumindest in eine Verstellrichtung verstellbar ist und die einen Öffnungen in der Manteleinheit und in der mindestens einen Seitenwange durchsetzenden Spannbolzen umfasst.

Verstellbare Lenksäulen sind in unterschiedlichen Ausführungsformen bekannt. Obwohl auch Konstruktionen bekannt geworden sind, bei denen die Lenksäule nur in eine Richtung verstellbar ist, sind heute übliche Lenksäulen sowohl in ihrer Länge, also in achsialer Richtung, als auch in Ihrer Höhe verstellbar. Bei der Höhenverstellung erfolgt üblicherweise eine Verschwenkung der Lenksäule um eine senkrecht zur Achsialrichtung der Lenksäule stehende horizontale Achse, so dass mit der Höhenverstellung auch eine mehr oder weniger große Neigungsverstellung einher geht.

Um die Lenksäule in der eingestellten Position festzulegen, sind Feststelleinrichtungen unterschiedlicher Bauart bekannt, die üblicherweise einen Spannbolzen und eine von einem Spannhebel betätigbare, auf den Spannbolzen einwirkende Spanneinrichtung aufweisen. Im geschlossenen Zustand der Feststelleinrichtung werden Feststellelemente miteinander in Eingriff gebracht, welche die die Lenkspindel lagernde Manteleinheit gegenüber der chassisfesten Konsoleneinheit reibschlüssig und/oder formschlüssig festlegen.

Im geschlossenen Zustand der Feststelleinrichtung muss die Manteleinheit einerseits gegenüber den im Normalbetrieb auf diese einwirkenden Kräften, insbesondere den vom Fahrer auf das Lenkrad ausgeübten Kräften, unverschiebbar gehalten sein, andererseits soll sich die Manteleinheit gegenüber der Konsoleneinheit auch im Crashfall möglichst nicht verschieben, um dem Fahrer eine größtmögliche Sicherheit zu bieten. Beispielsweise muss das Lenkrad auch für die Gewährleistung der Funktion des Airbags im Crashfall in der eingestellten Position verbleiben. Für verstellbare Lenksäulen werden daher auch genormte Tests durchgeführt, um die im geschlossenen Zustand der Feststelleinrichtung aufgebrachten Haltekräfte zu prüfen. Insbesondere in die Richtung der Höhenverstellung bestehen hierbei sehr hohe Anforderungen. Zur Prüfung der Haltekräfte in Richtung der Höhenverstellung bzw. Längenverstellung werden in die jeweilige Richtung wirkende Kräfte auf das vordere Ende der Lenkspindel, an welchem das Lenkrad anzubringen ist, aufgebracht.

Um hohe Haltekräfte zu erreichen sind Konstruktionen bekannt, die eine relativ große Anzahl von im geschlossenen Zustand miteinander in Eingriff stehenden Reibflächen aufweisen, wobei nach Art einer Lamellenkupplung miteinander in Eingriff bringbare Lamellen vorgesehen sind. Solche Lenksäulen sind beispielsweise aus der EP 0 802 104 B1, GB 2 092 967 A, WO 97,16337 A1, EP 1 170 194 A1 und US 4,554,843 A bekannt. Die erreichbaren Haltekräfte im geschlossenen Zustand der Feststelleinrichtung können aber bei solchen reibschlüssigen Feststelleinrichtungen nicht ohne weiteres beliebig erhöht werden. Durch eine größere Anzahl von Lamellen wir die Konstruktion aufwendiger und somit teurer, der Platzbedarf der Konstruktion erhöht und die erforderliche Kraft zur Verstellung der Lenksäule im geöffneten Zustand der Feststelleinrichtung vergrößert. Die von der Spanneinrichtung aufgebrachte Kraft kann im Hinblick auf die von der Konstruktion aufzunehmenden Kräfte und die für das Schließen der Spanneinrichtung mittels des Spannhebels erforderliche Kraft ebenfalls nicht beliebig erhöht werden.

Bei anderen bekannten verstellbaren Lenksäulen werden formschlüssig wirkende Eingriffselemente eingesetzt. Derartige Lenksäulen, bei der im geschlossenen Zustand der Feststelleinrichtung Verzahnungen miteinander in Eingriff kommen, sind beispielsweise aus der US 5,988,679 A und DE 195 42 472 C1 bekannt. Solche Verzahnungen haben aber unter anderem den Nachteil, dass keine stufenlose Verstellung der Lenksäule möglich ist und dass es im Falle des Schließens des Spannhebels in einer Verstellposition, in der die Spitzen der Zähne der einander gegenüberliegenden Zahnleisten gerade aufeinander ausgerichtet sind, zu einem Blockieren des Spannhebels kommen kann, so dass zunächst die Einstellung der Lenksäule etwas geändert werden muss und dann erst der Spannhebel geschlossen werden kann. Auch sind die von formschlüssig wirkenden Feststellelementen aufbringbaren Haltekräfte ebenfalls nicht beliebig hoch.

Bei einer zumindest auch in Richtung senkrecht zur Längsachse der Lenksäule auf das vordere Ende der Lenkspindel einwirkenden Kraft, wie diese im Crashfall auftreten kann, kommt es bei einer entsprechenden Auslegung der Eingriffselemente der Feststelleinrichtung zu einer Verformung der Lenksäule, bevor es unter Überwindung der Haltekräfte der Eingriffselemente zu einer Verschiebung der Manteleinheit gegenüber der Konsoleneinheit in Richtung der Höhenverstellung und gegebenenfalls auch in Richtung der Längsverstellung kommt. Bei dieser Verformung wird die Manteleinheit im Bereich der Seitenwange gegenüber dieser um eine parallel zum Spannbolzen und im Bereich der Feststelleinrichtung liegende Drehachse verdreht. Diese "virtuelle" Drehachse ändert ihre Lage im Bereich der Feststellelemente auch im Laufe der fortschreitenden Verformung der Lenksäule. Bei dieser Verdrehung der Manteleinheit gegenüber der Seitenwange werden zuerst vorhandene Spiele der Feststellelemente aufgebraucht und in der weiteren Folge kommt es zu einem gegenseitigen Verrutschen der Feststellelemente im Sinne einer Drehbewegung. Erst bei einem weiteren Ansteigen der Kraft wird die gegenüber einer Verschiebung in Richtung der Höhenverstellung und/oder in Richtung der Längsverstellung aufbringbare Haltekraft der Halteelemente schließlich überwunden und die Lenksäule verschiebt sich in Richtung der Höhenverstellung und/oder in Richtung der Längsverstellung bis zum Ende des Verstellbereiches. Die Verformung der Lenksäule durch die auf das vordere Ende der Lenkspindel bei geschlossener Feststelleinrichtung zumindest auch in Richtung der Höhenverstellung einwirkende Kraft wird zunächst dadurch bewirkt, dass miteinander ein Spiel aufweisende Teile, beispielsweise zwei gegeneinander teleskopierbare Teilstücke der Lenkspindel, auf Anschlag gehen, in der Folge kommt es zu Materialverformungen, beispielsweise durch Verbiegung von weniger starken Teilen der Lenkspindel.

Aufgabe der Erfindung ist es, eine verstellbare Lenksäule der eingangs genannten Art bereitzustellen, bei der bei einer im geschlossenen Zustand der Lenksäule auf die Lenksäule einwirkenden Kraft, die unter einer Verformung der Lenksäule zu einer Verdrehung zumindest des im Bereich der mindestens einen Seitenwange liegenden Abschnitts der Manteleinheit gegenüber dieser Seitenwange um eine parallel zum Spannbolzen und im Bereich der Feststelleinrichtung liegenden Drehachse führt, zumindest in eine Verstellrichtung, vorzugsweise zumindest in Richtung der Höhenverstellung, eine besonders hohe Haltekraft gegenüber einer Verstellung der Lenksäule aufgebracht wird. Erfindungsgemäß gelingt dies durch eine verstellbare Lenksäule mit den Merkmalen des Patentanspruchs 1.

Durch die Verdrehung der Manteleinheit gegenüber der Konsoleneinheit durch die einwirkende Kraft - wie oben beschrieben -, wobei diese Verdrehung im Bereich von wenigen Winkelgraden liegen kann, wird auf das Verkantteil ein Drehmoment um diese im Bereich der Feststelleinrichtung liegende, virtuelle Drehachse ausgeübt, wodurch eine Verkantung oder ein Verbeißen der Klemmkanten gegen die Klemmflächen. Dadurch wird die Verschiebbarkeit des Verkantteils in die Verstellrichtung blockiert, woraus eine hohe Haltekraft gegen eine Verstellung der Manteleinheit gegenüber der Konsoleneinheit in dieser Verstellrichtung resultiert. Günstigerweise kann hierbei das Verkantteil, welches die Klemmkanten aufweist, zumindest im Bereich der Klemmkanten aus einem härteren Material als dasjenige der Klemmflächen bestehen, wodurch ein formschlüssiges Verkrallen bzw. Eingraben der Klemmkanten in der Klemmflächen unterstützt wird.

In einer vorteilhaften Ausführungsform der Erfindung ist die Lenksäule sowohl in Ihrer Länge als auch in der Höhe verstellbar ausgebildet und zumindest ein in Richtung der Höhenverstellung wirkendes Verkantteil vorgesehen. Dieses kann vorteilhafterweise gegenüber der Seitenwange der Konsoleneinheit in Richtung der Höhenverstellung verschiebbar gelagert sein und an der Manteleinheit in Richtung der Höhenverstellung unverschiebbar befestigt sein, wobei das Verkantteil zur Ermöglichung der Längenverstellung gegenüber der Manteleinheit in der Richtung der Längenverstellung verschiebbar gelagert ist.

Vorteilhafterweise kann weiters die Konsoleneinheit beidseitig der Manteleinheit sich erstreckende Seitenwangen aufweisen, zwischen denen die Manteleinheit geführt ist, wobei der Spannbolzen beide Seitenwangen durch Öffnungen durchsetzt. Weiters können günstigerweise die vom Spannbolzen durchsetzten Öffnungen in der Manteleinheit und in der mindestens einen Seitenwange als Langlöcher ausgebildet sein, die einerseits in Richtung der Längenverstellung, andererseits in Richtung der Höhenverstellung ausgerichtet sind. Anstelle von sich kreuzenden Langlochausnehmungen könnten zur Ermöglichung sowohl einer Längenverstellung als auch einer Höhenverstellung beispielsweise auch fensterartige Öffnungen entweder in der Manteleinheit oder in den Seitenwangen vorgesehen sein.

Weitere Vorteile und Einzelheiten der Erfindung werden im folgenden anhand der in der Zeichnung dargestellten Ausführungsbeispiele der Erfindung erläutert. In der Zeichnung zeigen:
- Fig. 1 und Fig. 2: Seitenansichten eines ersten Ausführungsbeispiels einer erfindungsgemäßen Lenksäule;
- Fig. 3: eine Ansicht von unten;
- Fig. 4: eine perspektivische Darstellung der Lenksäule, wobei das Verkantteil und die auf den Spannbolzen aufzuschraubende Spannmutter nach Art einer Explosionszeichnung auseinandergezogen sind;
- Fig. 5: eine perspektivisch Darstellung von Teilen der Feststelleinrichtung, teilweise nach Art einer Explosionsdarstellung auseinandergezogen;
- Fig. 6: eine Fig. 5 entsprechende perspektivisch Darstellung, aber aus einem anderen Blickwinkel;
- Fig. 7: einen Querschnitt entlang der Linie AA von Fig. 3;
- die Fig. 8 und 9: perspektivische Darstellungen des Verkantteils aus verschiedenen Blickwinkeln;
- Fig. 10: eine Ansicht der Innenseite des Verkantteils;
- Fig. 11: ein zweites Ausführungsbeispiel der Erfindung in Seitenansicht;
- Fig. 12: eine perspektivische Darstellung des zweiten Ausführungsbeispiels der Erfindung, wobei Teile der Feststelleinrichtung nach Art einer Explosionsdarstellung auseinandergezogen sind;
- Fig. 13: eine perspektivische Darstellung von Teilen der Feststelleinrichtung, teilweise explosionsartig auseinandergezogen, aus einem gegenüber der Fig. 12 geänderten Blickwinkel;
- Fig. 14: einen Querschnitt durch die Lenksäule im Bereich des Spannbolzens (analog Fig. 7);
- Fig. 15 und Fig. 16: das Verkantteil in dreidimensionaler Darstellung aus unterschiedlichen Blickwinkeln;
- Fig. 17 und Fig. 18: Ansichten der Außenseite und der Innenseite des Verkantteils;
- Fig. 19: eine Seitenansicht einer Lenksäule gemäß einem dritten Ausführungsbeispiel der Erfindung;
- Fig. 20: eine perspektivische Darstellung der Lenksäule, wobei Teile der Feststelleinrichtung nach Art einer Explosionsdarstellung auseinander gezogen sind;
- Fig. 21: eine perspektivische Darstellung aus einem anderen Blickwinkel, wobei wiederum Teile der Feststelleinrichtung auseinander gezogen sind, das Montageteil der Konsoleneinheit entfernt wurde und das Trägerteil der Konsoleneinheit mittig aufgeschnitten und auseinander gezogen wurde;
- Fig. 22 und 23: perspektivische Darstellungen des Verkantteils aus unterschiedlichen Blickwinkeln;
- Fig. 24: das Trägerteil der Konsoleneinheit in einer perspektivischen Darstellung;
- Fig. 25: eine Lenksäule entsprechend einem vierten Ausführungsbeispiel der Erfindung, wobei Teile der Feststelleinrichtung nach Art einer Explosionsdarstellung auseinander gezogen sind;
- Fig. 26: eine erspektivische, in ihrem Blickwinkel Fig. 25 entsprechende Darstellung, wobei das Montageteil der Konsoleneinheit entfernt wurde und das Trägerteil der Konsoleneinheit mittig aufgeschnitten und auseinander gezogen wurde;
- Fig. 27 eine Fig. 26: entsprechende perspektivische Darstellung, aber aus einem anderen Blickwinkel;
- Fig. 28 und Fig. 29: eine Ansicht des Verkantteils von außen und von innen;
- Fig. 30: eine perspektivische Darstellung eines fünften Ausführungsbeispiels einer erfindungsgemäßen Lenksäule, wobei Teile der Feststelleinrichtung nach Art einer Explosionsdarstellung auseinander gezogen sind;
- Fig. 31: eine perspektivische Darstellung aus einem gegenüber Fig. 30 unterschiedlichen Blickwinkel, wiederum teilweise nach Art einer Explosionsdarstellung;
- Fig. 32: einen im Überdeckungsbereich zwischen dem Verkantteil und dem an seiner Außenseite angeordneten Übertragungsteil;
- Fig. 33 und Fig. 34: Ansichten des Verkantteils von außen und von innen;
- Fig. 35: ein vergrößertes Detail B von Fig. 33;
- Fig. 36 und Fig. 37: Ansichten von außen und von innen eines modifizierten im Zusammenhang mit dem fünften Ausführungsbeispiel einsetzbaren Verkantteils;
- Fig. 38: einen Schnitt entlang der Linie CC von Fig. 36;
- Fig. 39: eine perspektivische Darstellung einer Lenksäule entsprechend einem sechsten Ausführungsbeispiel der Erfindung, wobei Teile der Feststelleinrichtung nach Art einer Explosionsdarstellung auseinandergezogen sind;
- Fig. 40 eine Fig. 39: entsprechende Darstellung, aber aus einem anderen Blickwinkel und wobei das Montageteil der Konsoleneinheit der Länge nach aufgeschnitten und auseinander gezogen ist;

- Fig. 41: eine perspektivisch Darstellung des Trägerteils der Konsoleneinheit und von nach Art einer Explosionsdarstellung auseinandergezogenen Teilen der Feststelleinrichtung;
- Fig. 42: einen Querschnitt im Bereich des Spannbolzens und
- Fig. 43: ein vergrößertes Detail D von Fig. 42.
Die Fig. weisen unterschiedliche Maßstäbe auf. Gleichwirkende oder zumindest analoge Teile sind in den einzelnen Fig. mit den gleichen Bezugszeichen versehen.

Die Positionierungsangaben "innen" und "außen" sind in dieser Schrift so zu verstehen, dass weiter innen liegende Teile weiter in Richtung zur zentralen Längsachse der Lenkspindel als weiter außen liegende Teile angeordnet sind. Die Angaben "vorn" und "hinten" sind so zu verstehen, dass ein weiter vorn liegendes Teil weiter in Richtung zu dem Ende der Lenkspindel angeordnet ist, an welchem das Lenkrad anzubringen ist.

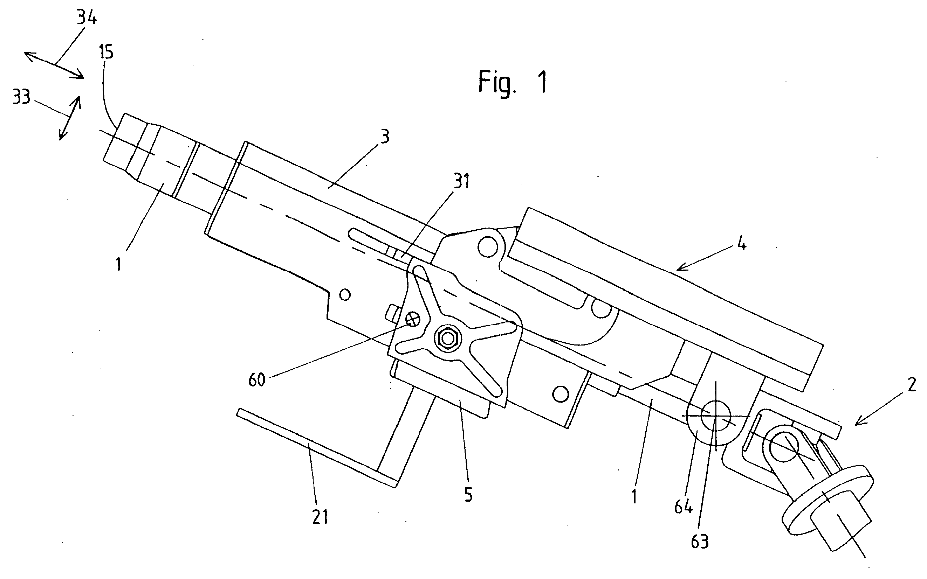

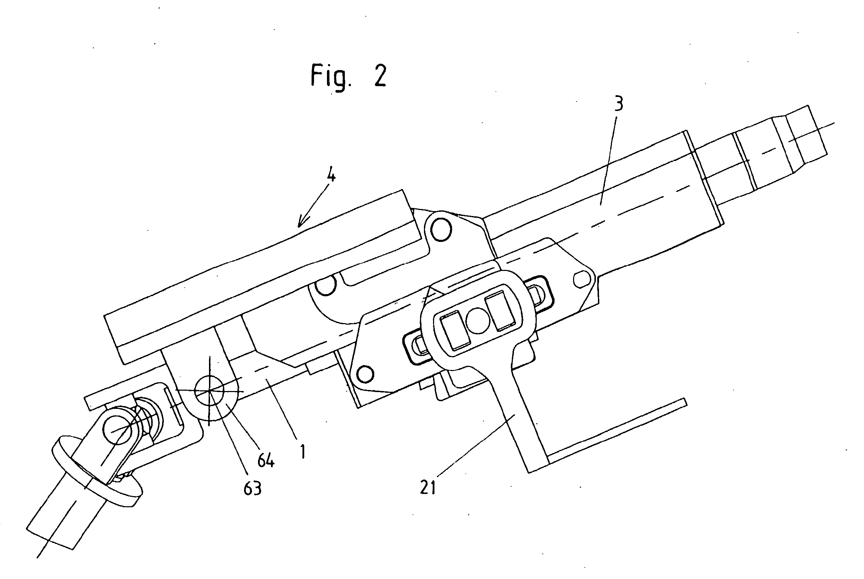

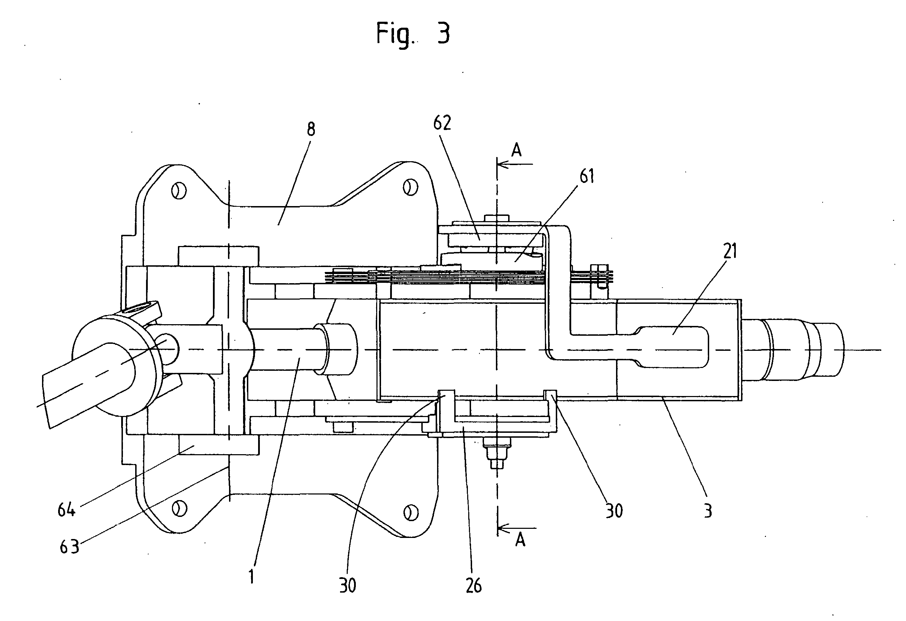

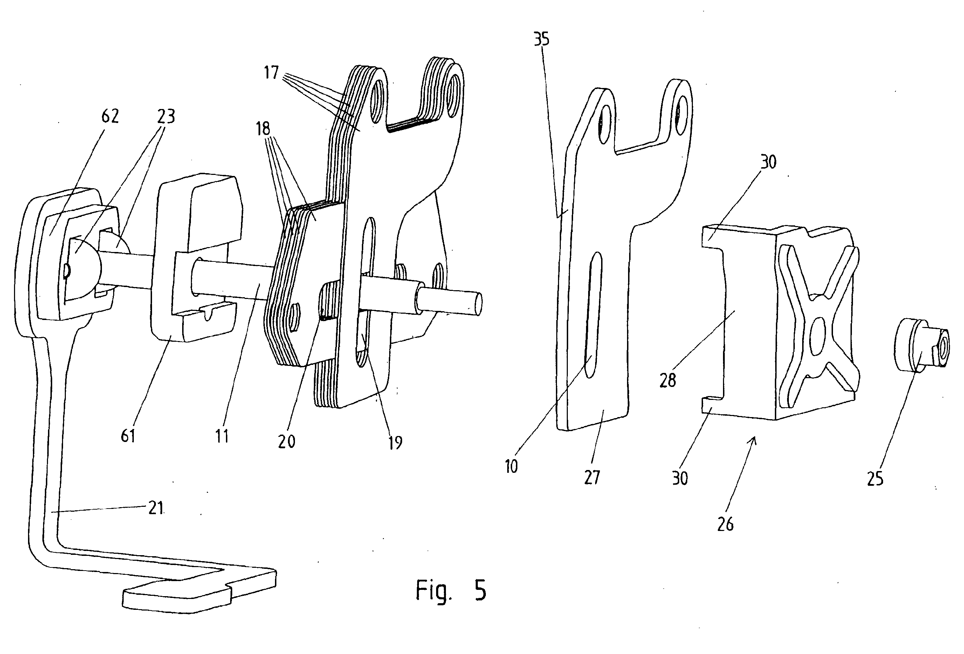

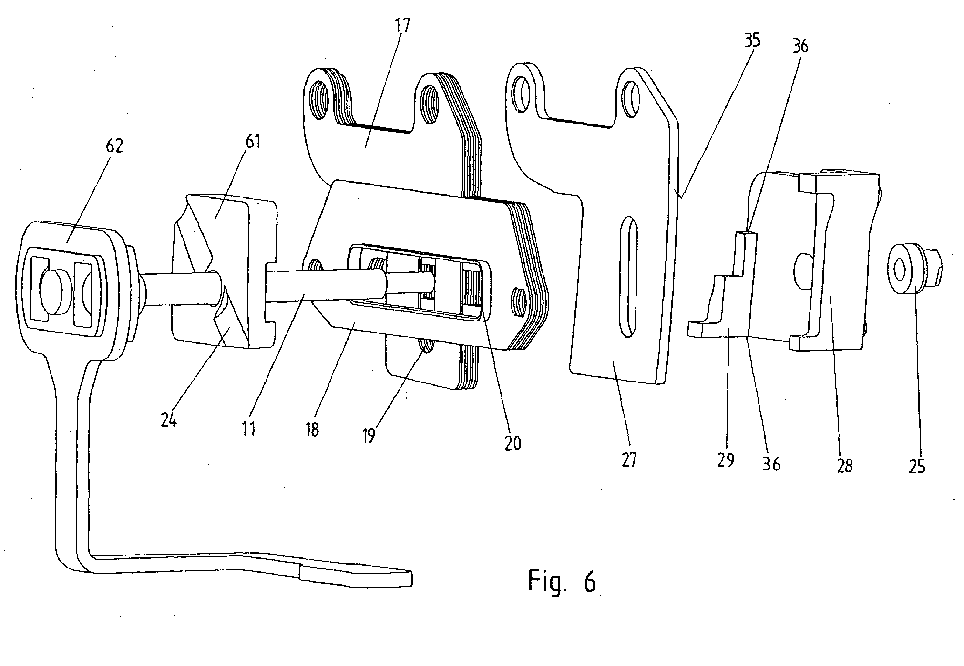

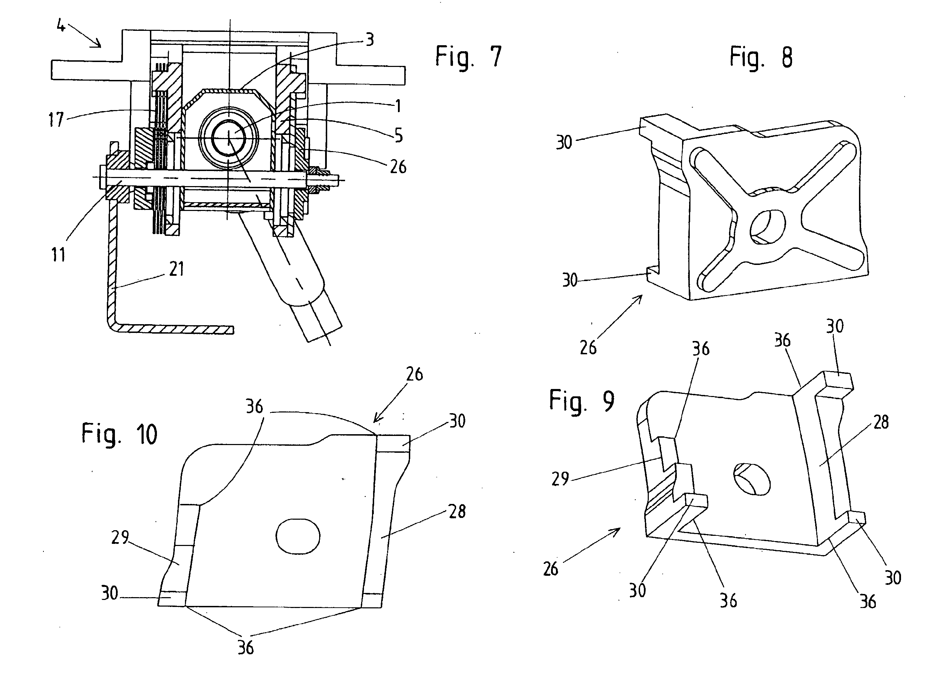

Ein erstes Ausführungsbeispiel einer erfindungsgemäßen Lenksäule ist in den Fig. 1 bis 10 dargestellt. Die Lenksäule umfasst eine Lenkwelle oder Lenkspindel 1, von der in den Fig. nur ein vorderer, an das in den Fig. nicht dargestellte Lenkrad anschließender Abschnitt bis zu einem ersten Kardangelenk 2 dargestellt ist. Die Lenkspindel 1 ist in einer beispielsweise rohr- oder kastenförmigen Manteleinheit 3, welche die Lenkspindel in einem Abschnitt derselben umgibt, drehbar gelagert. Die Manteleinheit 3 wird von einer Konsoleneinheit 4 getragen. Hierzu besitzt die Konsoleneinheit 4 zwei seitlich der Manteleinheit 3 sich erstreckende Seitenwangen 5, wodurch die Konsoleneinheit im Querschnitt gesehen (Fig. 7) etwa U-förmig ausgebildet ist. Die Seitenwangen 5 zusammen mit einer diese Seitenwangen verbindenden Trägerplatte 6 bilden ein Trägerteil 7 der Konsoleneinheit 4, welches in einem zur Montage am Chassis oder einem chassisfesten Teil des Kraftfahrzeuges vorgesehenen Montageteil 8 gehalten ist. Das Trägerteil 7 und das Montageteil 8 können hierbei starr verbunden sein. Es kann aber auch das Trägerteil 7 im Montageteil 8 in definierter Weise verklemmt sein, wobei im Crashfall eine Verschiebung des Trägerteils 7 in achsialer Richtung der Lenkspindel gegenüber dem Montageteil 8 möglich ist. Eine solche Verbindung des Trägerteils 7 mit dem Montageteil 8 ist bereits bei herkömmlichen Lenksäulen bekannt geworden und nicht Gegenstand der vorliegenden Erfindung. Auch eine Ausbildung der Konsoleneinheit bzw. eines Trägerteils 7 der Konsoleneinheit 4 mit nur einer einzelnen sich auf einer Seite der Manteleinheit neben dieser erstreckenden Lenksäule wäre denkbar und möglich.

Zur Ermöglichung einer Verstellung der Lenksäule in ihrer Länge, d. h. in achsialer Richtung der Lenkspindel 1, und in ihrer Höhe bzw. Neigung sind in der Manteleinheit 3 und in den Seitenwangen 5 der Konsoleneinheit 4 sich kreuzende Langlöcher 9, 10 vorgesehen, die von einem in den gezeigten Ausführungsbeispielen durchgehenden Spannbolzen 11 durchsetzt werden. Für die Längenverstellung der Lenkspindel weist diese zudem in bekannter Weise zwei teleskopartig in Achsialrichtung gegeneinander verschiebbare Abschnitte auf. Die Langlöcher 9 in den gegenüberliegenden Seitenflächen 12 der Manteleinheit 3 sind parallel zur Längsachse 13 der Lenkspindel 1 ausgerichtet und dienen somit der Längenverstellung. Die Langlöcher 10 in den Seitenwangen 5 kreuzen die Langlöcher 9 etwa rechtwinklig und dienen der Höhen- bzw. Neigungsverstellung. Bei dieser Höhenverstellung erfolgt eine Verschwenkung der Lenkspindel und der Manteleinheit um eine parallel zur Längsachse 14 des Spannbolzens 11 liegende, im Bereich des Kardangelenks 2 gebildete Achse 63, so dass gleichzeitig mit der Höhenverstellung der Lenkspindel im Bereich von deren vorderem Ende 15, an welchem ein Lenkrad angebracht wird, eine Neigungsverstellung der Längsachse 13 der Lenkspindel erfolgt. Die Achse 63 kann beispielsweise dadurch gebildet werden, dass ein die Lenkspindel 1 drehbar aufnehmendes und diese ringförmig umgebendes drehbares Teil vorgesehen ist, das beidseitig abstehende Bolzen aufweist, die drehbar in Laschen 64 des Konsolenteils 4 aufgenommen sind.

Im gezeigten Ausführungsbeispiel sind an der Außenseite der einen Seitenwange 5 zwei Pakete von sich kreuzenden und sandwichartig durchsetzenden Lamellen 17, 18 vorgesehen. Die Lamellen 17 besitzen Langlöcher 19, die im wesentlichen deckungsgleich zu den Langlöchern 10 in den Seitenwangen 5 liegen, und die Lamellen 18 besitzen Langlöcher 20, die im wesentlichen deckungsgleich zu den Langlöchern 9 in der Manteleinheit 3 liegen. Die Lamellen 17 sind an der Außenseite der Seitenwangen 5 befestigt, die Lamellen 18 an der Außenseite der Manteleinheit 3, zu welchem Zweck jeweils entsprechende Tragbolzen vorgesehen sind.

Die Lamellen 17, 18 und der erwähnte Spannbolzen 11 bilden Teile einer Feststelleinrichtung zur Befestigung der Manteleinheit 3 gegenüber den Seitenwangen 5 in einer eingestellten Position. Diese Feststelleinrichtung umfasst weiters eine vom Spannbolzen durchsetzte Gegendruckplatte 61 und eine ebenfalls vom Spannbolzen durchsetzte Spannplatte 62, an der ein Spannhebel 21 angebracht ist, durch welchen die Spannplatte 62 um die Längsachse 14 des Spannbolzens 11 verdrehbar ist. Der Kopf 22 des Spannbolzens liegt an der Außenseite der Spannplatte 62 an. Auf der der Gegendruckplatte 61 zugewandten Seite besitzt die Spannplatte 62 überstehende Rollen 23, die im geöffneten Zustand der Feststelleinrichtung in Vertiefungen 24 der Gegendruckplatte 61 liegen. Bei einer Verdrehung der Spannplatte 62 kommen die Rollen 23 in Bereichen der Gegendruckplatte 61 ohne solche Vertiefungen zu liegen, wodurch die Gegendruckplatte 61 und die Spannplatte 62 weiter voneinander beabstandet werden. Die Gegendruckplatte 61 wird dadurch gegen die Lamellen 17, 18 gepresst, wodurch diese gegeneinander verspannt werden. Anstelle der gezeigten Gegendruckplatte 61 und Spannplatte 62 könnte auch eine anders ausgebildete von einem Spannhebel 21 betätigbare Spanneinheit vorgesehen sein, die beispielsweise aneinander anliegende Schraubenflächen aufweisen.

Auf der gegenüberliegenden Seite des Spannbolzens 11 ist an dessen Ende eine Spannmutter 25 aufgeschraubt, die an der Außenseite eines Verkantteils 26 anliegt. Beim Schließen der Feststelleinrichtung werden neben den von den Lamellen 17, 18 gebildeten Reibflächen weitere Flächen reibschlüssig aneinandergelegt, wodurch die Haltekraft gegenüber einer Verstellung der Lenksäule im geschlossenen Zustand der Spanneinrichtung erhöht wird. Es sind dies die einander zugewandten Seitenflächen 12 der Manteleinheit 3 und Innenflächen der Seitenwangen 5 sowie die einander zugewandte Außenfläche der in Fig. 7 rechts liegenden Seitenwange 5, die von der an der Seitenwange 5 angeordneten Verstärkungsplatte 27 gebildet wird und der Innenfläche des Verkantteils 26. Alle miteinander zusammenwirkenden Reibflächen bilden Feststellelemente der Feststelleinrichtung.

Mit Ausnahme des im folgenden genauer erläuterten Verkantteils 26 entspricht die in den Ausführungsbeispielen der Erfindung gezeigte Feststelleinrichtung mit den beschriebenen zusammenwirkenden Reibflächen von ihrem Aufbau und ihrer Funktion her prinzipiell der aus der EP 0 802 104 B1 bekannten Feststelleinrichtung. Auch andere Feststelleinrichtungen könnten im Rahmen der Erfindung vorgesehen sein, beispielsweise solche mit formschlüssig wirkenden Feststellelementen oder auch solche, bei denen der Spannbolzen nicht durchgeht oder solche, bei denen ein zusätzliches, insbesondere zwischen der Manteleinheit und der Konsoleneinheit angeordnetes Führungsteil vorgesehen ist, wobei das Führungsteil gegenüber der Konsoleneinheit in eine erste Verstellrichtung und die Manteleinheit gegenüber dem Führungsteil in eine zweite Verstellrichtung verstellbar sind.

Das Verkantteil 26 weist an seiner Innenseite beidseitig die Seitenwange übergreifende Verkantleisten 28, 29 auf, an denen nach innen abstehende, nasenartige Eingriffselemente 30 angeordnet sind. Das obere dieser Eingriffselemente 30 ragt in einen in der Seitenfläche 12 der Manteleinheit angeordneten Führungsschlitz 31, der parallel zum Langloch 9 ausgerichtet ist. Die unteren Eingriffselemente 30 übergreifen den unteren Längsrand 32 der Manteleinheit 3.

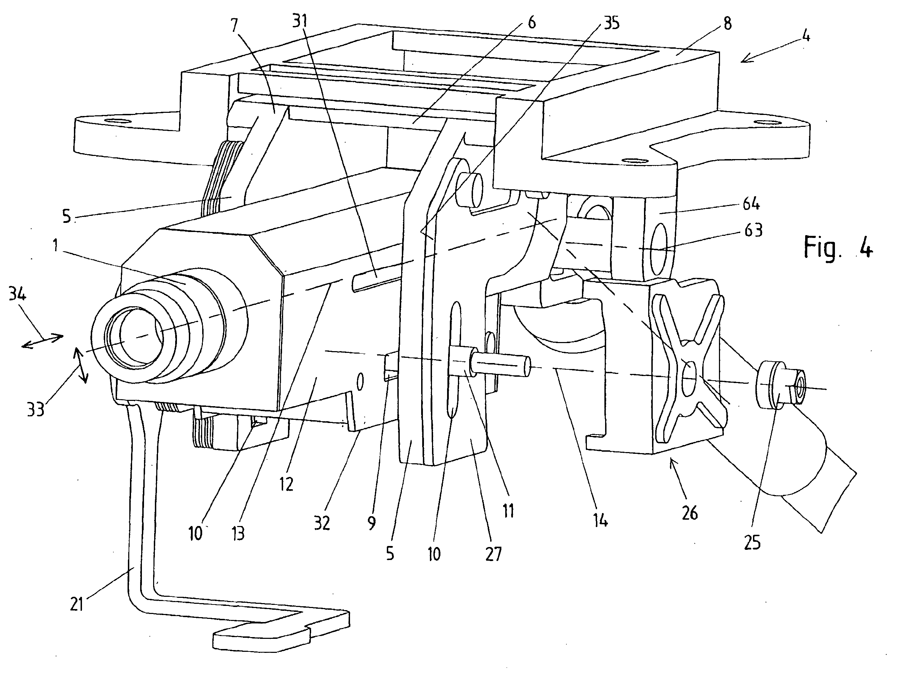

Dieses in Richtung der Höhenverstellung wirkende Verkantteil 26 ist durch die Eingriffselemente 30 somit in Richtung der Höhenverstellung, die in Fig. 4 durch den Doppelpfeil 33 angedeutet ist, und verschiebbar an der Manteleinheit 3 befestigt. In Richtung der Längsverstellung (Doppelpfeil 34 in Fig. 4) ist das Verkantteil 26 dagegen verschiebbar gegenüber der Manteleinheit 3 gelagert. In Richtung der Höhenverstellung 33 ist das Verkantteil 26 weiters verschiebbar gegenüber der Seitenwange 5 gelagert, wobei die Seitenwange 5 in der durch die beiden Verkantleisten 28, 29 begrenzten Führungsbahn des Verkantteils 26 läuft. Das Verkantteil 26 wird vom Spannbolzen 11 durch eine Öffnung im Verkantteil 26 durchsetzt.

Zu den im Normalbetrieb (ohne eine Verdrehung der Manteleinheit aufgrund von einwirkenden Kräften) bei geschlossener Feststelleinrichtung von dieser aufgebrachten Haltekräften trägt das Verkantteil 26 nur geringfügig (über seine an der Seitenwange 5 anliegende Innenfläche) bei. Bei einem den Crashfall simulierenden Test zur Ermittlung der maximalen Haltekraft der Feststelleinrichtung in Richtung der Höhenverstellung wird auf die Lenkspindel im Bereich ihres vorderen Endes 15 eine in Richtung der Höhenverstellung (Doppelpfeil 33) wirkende Kraft ausgeübt. Diese Kraft wird zunächst von den Feststellelementen der Feststelleinrichtung aufgenommen, wobei diese Feststellelemente beispielsweise von den aneinander anliegenden Reibflächen von Lamellen oder anderen Teilen gebildet werden können. Bevor die Haltekräfte der Feststellelemente im Sinne einer Verschiebung der Manteleinheit in Richtung der Höhenverstellung überwunden werden, können die im gezeigten Ausführungsbeispiel von Lamellen gebildeten Feststellelemente im Sinne einer Verdrehung gegeneinander verrutschen. Dadurch wird eine gewisse Verdrehung der Manteleinheit 3 gegenüber den Seitenwangen 5 im Bereich der Feststelleinrichtung ermöglicht, wobei sich die Lenkspindel gegenüber der achsialen Ausrichtung verformt. Bei dieser Verformung werden zunächst zwischen Teile vorhandene Spiele ausgenützt und in der weiteren Folge kommt es zu Materialverformungen, insbesondere zu Verbiegungen von Teilen der Lenkspindel. Diese Verdrehung der Manteleinheit 3 gegenüber den Seitenwangen 5 erfolgt um eine parallel zum Spannbolzen ausgerichtete und in einem Bereich der Feststelleinrichtung liegende virtuelle Drehachse 60, die in Fig. 1 beispielsweise eingezeichnet ist. Die Lage dieser virtuellen Drehachse kann sich im Laufe der Erhöhung der auf das vordere Ende der Lenksäule einwirkende Kraft verändern und sich beispielsweise näher in Richtung zum Spannbolzen 11 oder auf eine andere Seite desselben verschieben. Aufgrund der von den Feststellelementen ausgeübten Haltekräfte liegt diese Drehachse 60 im Bereich der Feststelleinrichtung, d. h. sie durchsetzt die Lenksäule in einem Bereich, über den sich die Feststellelemente der Feststelleinrichtung ausdehnen. Die Verdrehung der Manteleinheit 3 gegenüber den Seitenwangen 5 erfolgt dabei bereits bei einer am vorderen Ende der Lenkspindel angreifenden Kraft, die kleiner ist als eine für eine Verschiebung der Manteleinheit 3 im Verstellbereich gegenüber den Seitenwangen 5 erforderliche Kraft, welche demgegenüber höher wäre.

Erfindungsgemäß ist nunmehr ein Verkantteil 26 vorgesehen, das bei einer Verdrehung der Manteleinheit 3 gegenüber den Seitenwangen 5 um die Drehachse 60 wirksam wird, indem die Klemmkanten 36 mit den Klemmflächen 35 in Eingriff kommen. Dadurch wird eine zusätzliche Haltekraft ausgeübt. Die erforderliche auf das vordere Ende der Lenksäule in Richtung der Höhenverstellung einwirkende Kraft, um eine Verschiebung der Manteleinheit 3 gegenüber der Konsoleneinheit 4 in Richtung der Höhenverstellung zu bewirken, wird dadurch wesentlich erhöht.

Bei der Verdrehung der Manteleinheit 3 gegenüber der Konsoleneinheit 4 wird das Verkantteil 26 über die Eingriffselemente 30 von der Manteleinheit mitgenommen und somit gegenüber der Seitenwange 5 verdreht. Es werden dadurch die Verkantleisten 28, 29 mit jeweils einem ihrer Enden (abhängig von der Richtung der Verdrehung) an die vordere und hintere Stirnfläche der Seitenwange 5 angepresst, so dass diese Stirnflächen somit Klemmflächen 35 und die Enden der Verkantleisten 28, 29 Klemmkanten 36 darstellen. Durch die Anpressung der Klemmkanten 36 an die Klemmflächen 35 erfolgt eine Blockierung der Verschiebbarkeit des Verkantteils 26 gegenüber der Seitenwange 5, wobei sich die Klemmkanten 36 in das Material der Klemmflächen 35 eingraben können, so dass eine formschlüssige Verbindung zwischen dem Verkantteil 26 und der Seitenwange 5 ausgebildet wird. Zur Unterstützung des Eingrabens bzw. Verkrallens der Klemmkanten 36 in den Klemmflächen 35 ist das Verkantteil 26 vorzugsweise aus einem härteren Material als die Seitenwange 5 mit der daran befestigten Verstärkungsplatte 27 ausgebildet.

Im Crashfall kann dadurch ein Großteil der in Richtung der Höhenverstellung wirkenden Kräfte durch das Zusammenwirken des Verkantteils 26 mit der Seitenwange 5 aufgenommen werden. Beispielsweise können 25% der auftretenden Kräfte von den Lamellen (in Verbindung mit den übrigen Reibflächen, die aber einen gegenüber den Lamellen wesentlich geringeren Beitrag leisten) und 75% der auftretenden Kräfte durch den Eingriff der Klemmkanten 36 mit den Klemmflächen 35 aufgenommen werden.

Die Konsoleneinheit 4 kann beispielsweise von einem Druckgussteil gebildet werden, während das Verkantteil 26 aus einem hochfesten Stahl bestehen kann.

Aufgrund der bogenförmigen Verschwenkung der Manteleinheit 3 gegenüber der Konsoleneinheit 4 weisen die Seitenwangen 5 im Bereich ihrer vorderen und hinteren Stirnflächen einen dieser Verschwenkung angepassten gebogenen Verlauf auf, ebenso wie die Verkantleisten 28, 29 bevorzugterweise einen daran angepassten bogenförmigen Verlauf aufweisen.

Anstelle des Eingriffs eines Eingriffselements 30 in den Schlitz 31, könnte auch eine entsprechende Nut vorgesehen sein oder es könnte ein den oberen Längsrand der Manteleinheit 3 übergreifendes Eingriffselement vorgesehen sein.

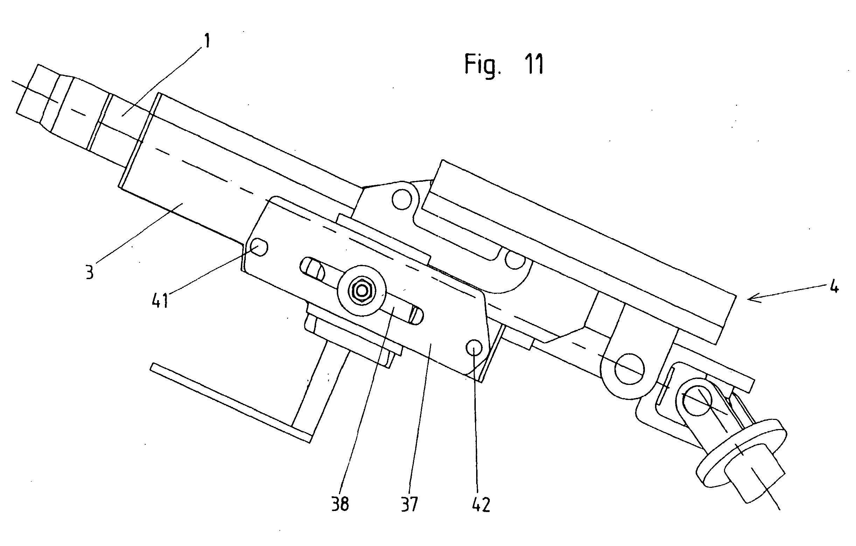

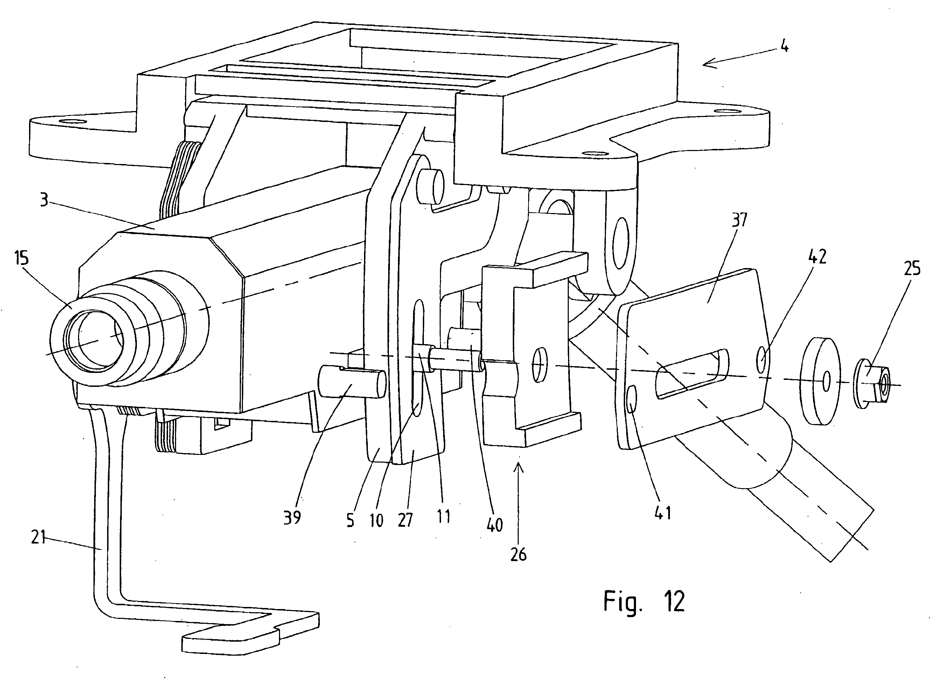

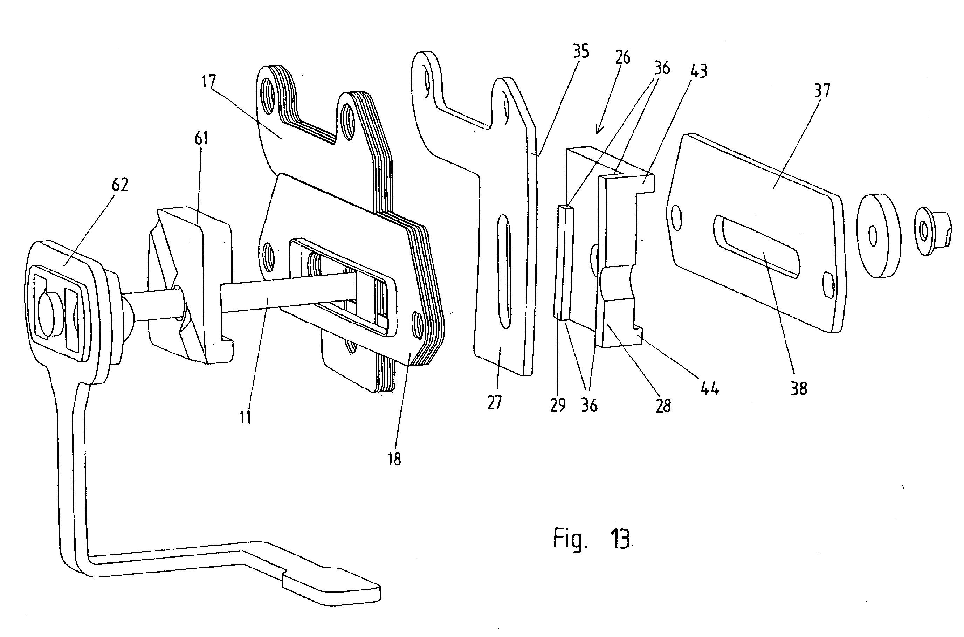

Das in den Fig. 11 bis 17 dargestellte zweite Ausführungsbeispiel der Erfindung unterscheidet sich gegenüber dem beschriebenen ersten Ausführungsbeispiel der Erfindung in der Ausbildung des Verkantteils und der Art des Eingriffs des Verkantteils mit der Manteleinheit 3. Die übrigen Teile der Lenksäule und der Feststelleinrichtung sind gleich wie beim beschriebenen ersten Ausführungsbeispiel ausgebildet. Das Verkantteil 26 ist wiederum an der Außenseite einer der Seitenwangen 5 angeordnet, wobei die sich sandwichartig kreuzenden Lamellen 17, 18 auf der Außenseite der anderen Seitenwange 5 vorgesehen sind. An der Außenseite des Verkantteils 26 ist bei diesem Ausführungsbeispiel ein plattenförmiges Übertragungsteil 37 angeordnet, das vom Spannbolzen 11 durch eine Langlochausnehmung 38 durchsetzt wird, die etwa deckungsgleich mit der Langlochausnehmung 9 in der Manteleinheit 3 angeordnet ist. In achsialer Richtung der Lenkspindel gesehen vor und hinter der Seitenwange 5 sind an der Manteleinheit 3 nach außen abstehende Tragbolzen 39, 40 festgelegt, die Öffnungen 41, 42 im plattenförmigen Übertragungsteil 37 durchsetzen, wodurch das Übertragungsteil 37 in Richtung der Höhenverstellung und Längenverstellung der Lenkspindel unverschiebbar an der Manteleinheit 3 gehalten ist. Das Verkantteil weist wiederum nach innen abstehende Verkantleisten 28, 29 auf, die die Stirnseiten der Seitenwange 5 übergreifen, wobei die Seitenwange in Richtung der Höhenverstellung gegenüber dem Verkantteil 26 verschiebbar ist. An der Außenseite des Verkantteils 26 stehen Übertragungsleisten 43, 44 ab, die parallel zur Richtung der Längsverstellung der Lenksäule liegen und den oberen und unteren Rand des Übertragungsteils 37 übergreifen. Das Verkantteil 26 ist dadurch in Richtung der Höhenverstellung unverschiebbar am Übertragungssteil 37 und über dieses an der Manteleinheit 3 befestigt, während es in Richtung der Längsverstellung gegenüber dem Übertragungsteil 37 und somit gegenüber der Manteleinheit 3 verschiebbar ist.

Im Crashfall wird ein eine Verdrehung der Manteleinheit 3 um eine parallel zur Achse des Spannbolzens 11 und im Bereich der Feststellelemente liegende Drehachse 60 bewirkendes Drehmoment über das Übertragungsteil 37 und die Übertragungsleisten 43, 44 auf das Verkantteil 26 übertragen, wodurch die Klemmkanten 36 der Verkantleisten gegen die Klemmflächen an der vorderen und hinteren Stirnseite der Seitenwange 5 gepresst werden.

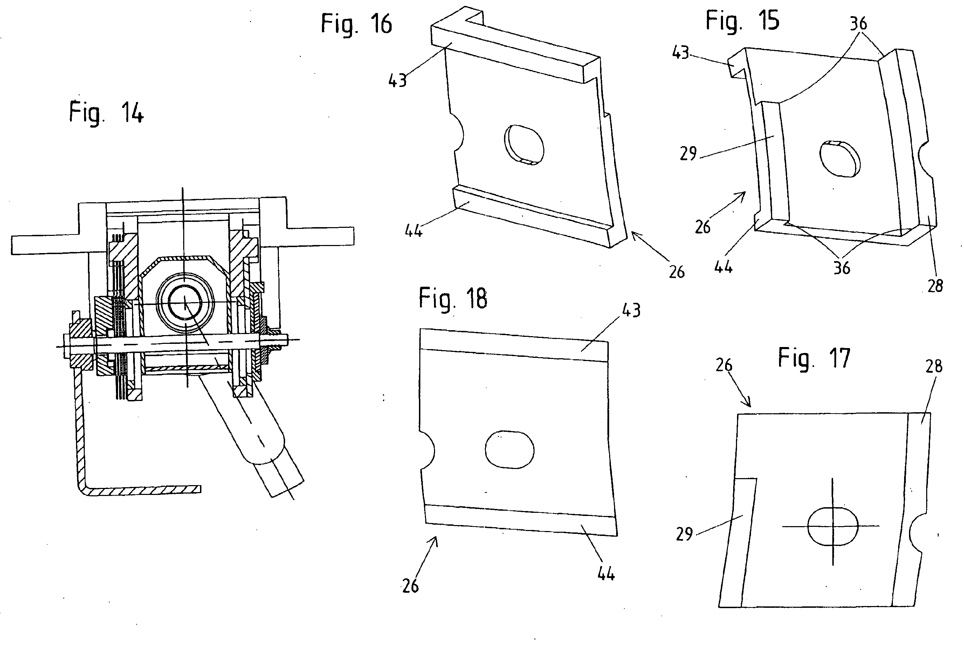

Wie insbesondere aus Fig. 17 ersichtlich ist, weisen die Verkantleisten 28, 29 einen von der Geraden abweichenden Verlauf auf, der an die bogenförmige Verschwenkung der Manteleinheit bei der Höhenverstellung der Lenksäule angepasst ist. Die vordere und hintere Stirnseite der Seitenwange 5, welche die Klemmflächen 35 bildet, weist ebenfalls einen an die Verschwenkung bei der Höhenverstellung angepassten bogenförmigen Verlauf auf.

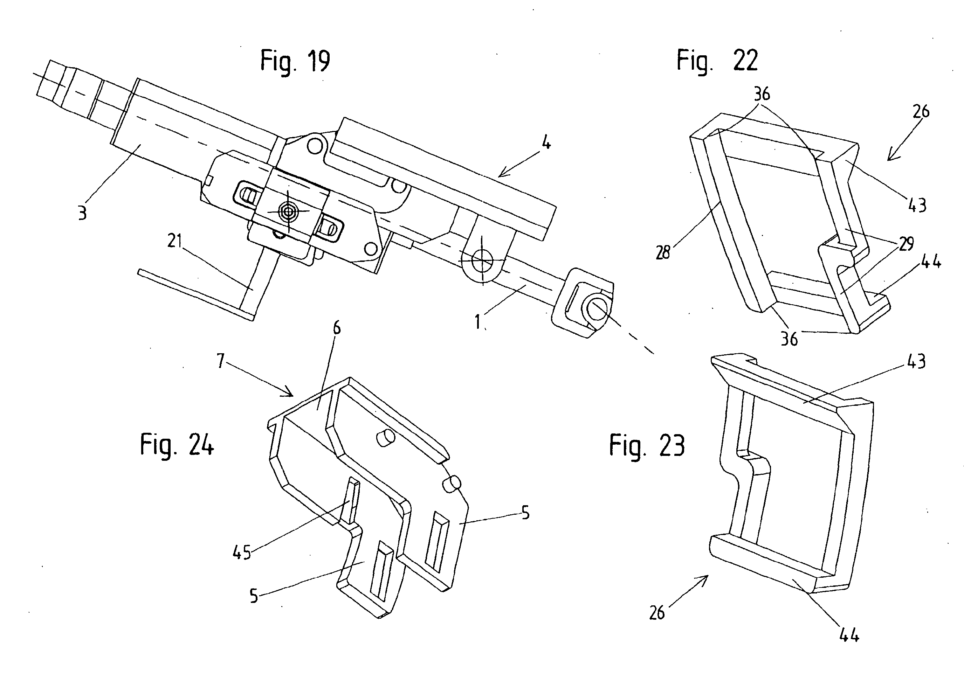

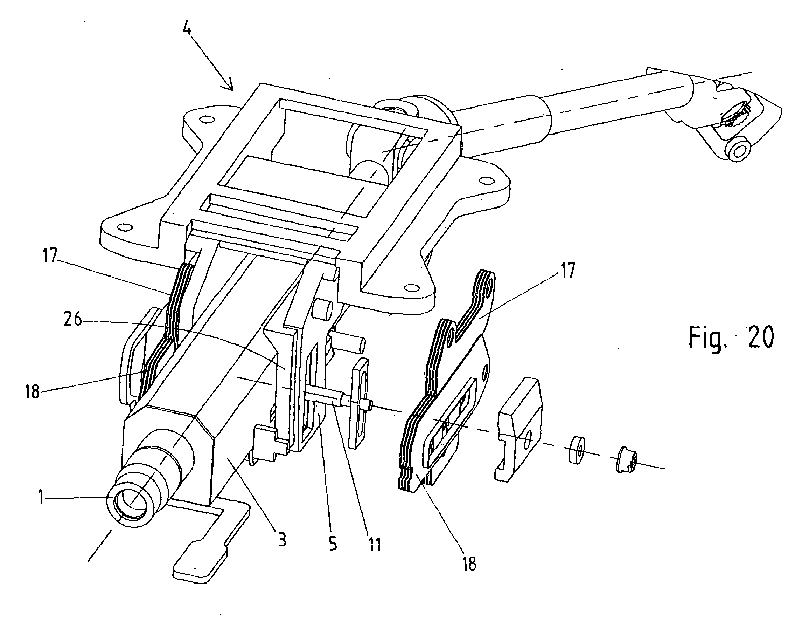

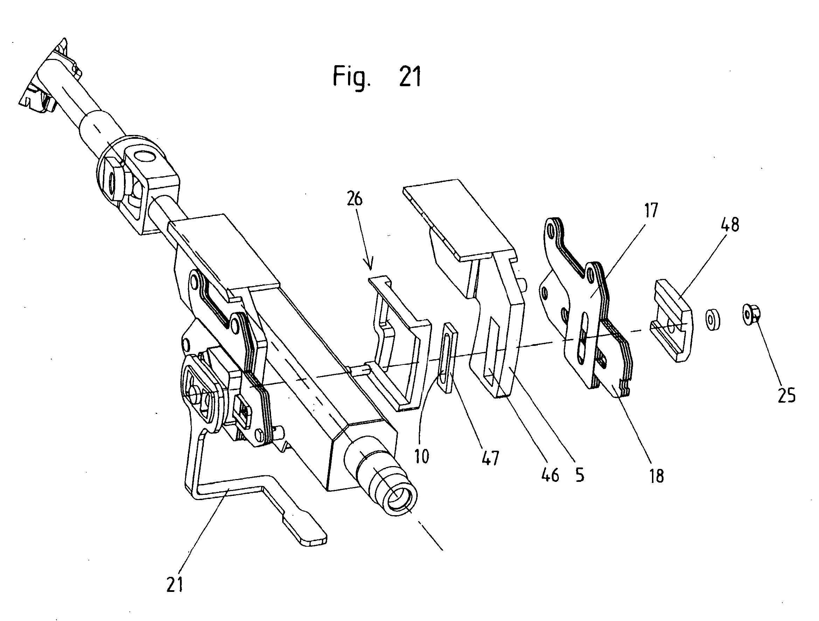

Das in den Fig. 19 bis 24 dargestellte dritte Ausführungsbeispiel der Erfindung unterscheidet sich von den zuvor beschriebenen Ausführungsbeispielen insbesondere in der Art der Ausbildung des Verkantteils, welches bei diesem Ausführungsbeispiel zwischen der Seitenwange 5 der Konsoleneinheit 4 und der Manteleinheit 3 angeordnet ist. Weiters sind bei diesem Ausführungsbeispiel an den Außenseiten beider Seitenwangen 5 sich sandwichartig durchsetzende und kreuzende Lamellenpakete von Lamellen 17, 18 angeordnet, obwohl auch nur einseitig solche sich kreuzende Lamellenpakete vorgesehen sein könnten. Diese Lamellen 17, 18 sind über entsprechende Haltebolzen an der Manteleinheit 3 (Lamellen 18) bzw. an der Konsoleneinheit 4 (Lamellen 17) befestigt.

Das Verkantteil 26 ist hier rahmenartig ausgebildet, wobei der Spannbolzen 11 eine große zentrale Öffnung des umfangsgeschlossenen Rahmens des Verkantteils 26 durchsetzt. Auf der zur Seitenwange 5 weisenden Seite des Verkantteils 26, also in diesem Ausführungsbeispiel auf der Außenseite, sind abstehende Verkantleisten 28, 29 ausgebildet, die teilweise die vorderen und hinteren Stirnseiten der Seitenwange übergreifen, teilweise in eine Nut 45 an der Innenseite der Seitenwange 5 ragen. Das Verkantteil 26 ist auf diese Weise wiederum gegenüber der Seitenwange 5 in Richtung der Höhenverstellung verschiebbar gelagert.

Auf der der Manteleinheit 3 zugewandten Innenseite weist das Verkantteil 26 nach innen abstehende Übertragungsleisten 43, 44 auf, die in Richtung der Längsverstellung verlaufende Ränder der Manteleinheit 3 übergreifen und durch die das Verkantteil in Richtung der Längsverstellung verschiebbar gegenüber der Manteleinheit 3 geführt ist, in Richtung der Höhenverstellung aber unverschiebbar gegenüber der Manteleinheit 3 mit dieser verbunden ist.

Durch diese Ausbildung des Verkantteils 26 kann eine relativ geringe Baubreite der Lenksäule in diesem Bereich erreicht werden.

Im Crashfall wird von der Manteleinheit 3 über die Übertragungsleisten 43, 44 ein Drehmoment auf das Verkantteil 26 übertragen, so dass die Klemmkanten 36 der Verkantleisten 28, 29 mit entsprechenden Klemmflächen 35 der Seitenwange 5 verklemmen, wobei die Klemmflächen in diesem Fall von den vorderen und hinteren Stirnseiten der Seitenwange 5 und der Seitenfläche der Nut 45 gebildet wird. Die schräge Übertragungsleiste 43 bewirkt bei der Verdrehung der Manteleinheit 3 gegenüber der Konsoleneinheit eine resultierende Spannkraft zur Verklemmung der Lamellen.

Das Langloch 10 in der Seitenwange 5 ist bei diesem Ausführungsbeispiel in einem in einer entsprechenden Ausnehmung 46 in der Seitenwange 5 eingesetzten und festgelegten Einsatzteil 47 aus Kunststoff angeordnet. Zur Klemmung beider Lamellenpakete ist auch auf der dem Spannhebel 21 gegenüberliegenden Seite des Spannbolzens 11 eine von der Spannmutter 25 gehaltene Gegendruckplatte 48 angeordnet, die im geschlossenen Zustand der Spanneinrichtung die auf dieser Seite angeordneten Lamellen gegen die Außenfläche der Seitenwange 5 verspannt.

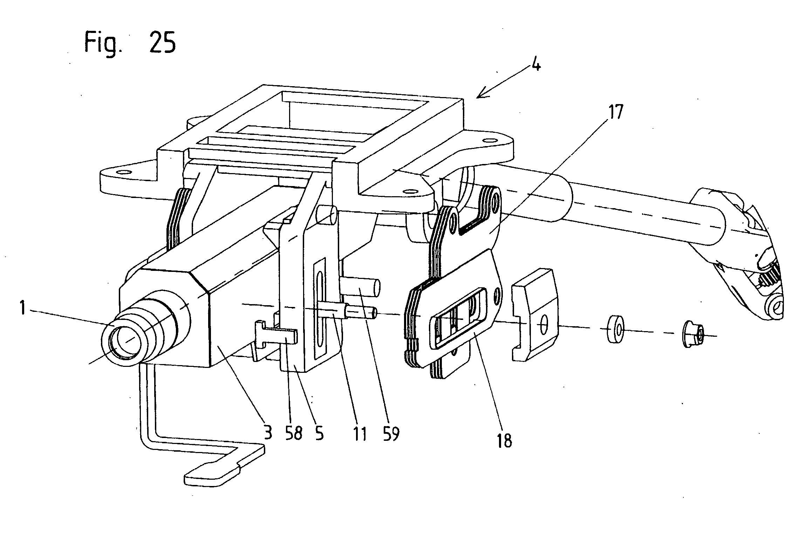

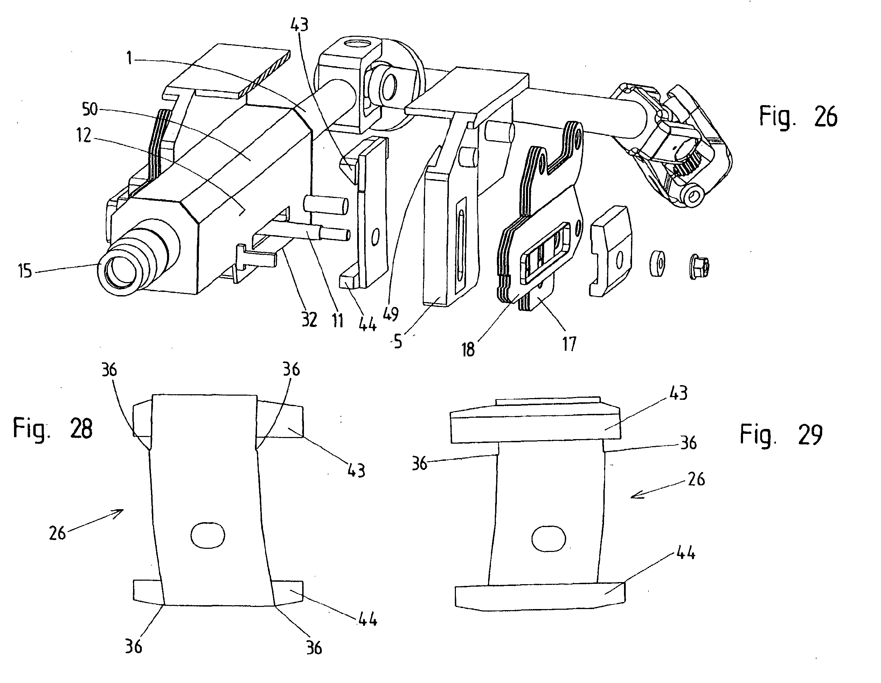

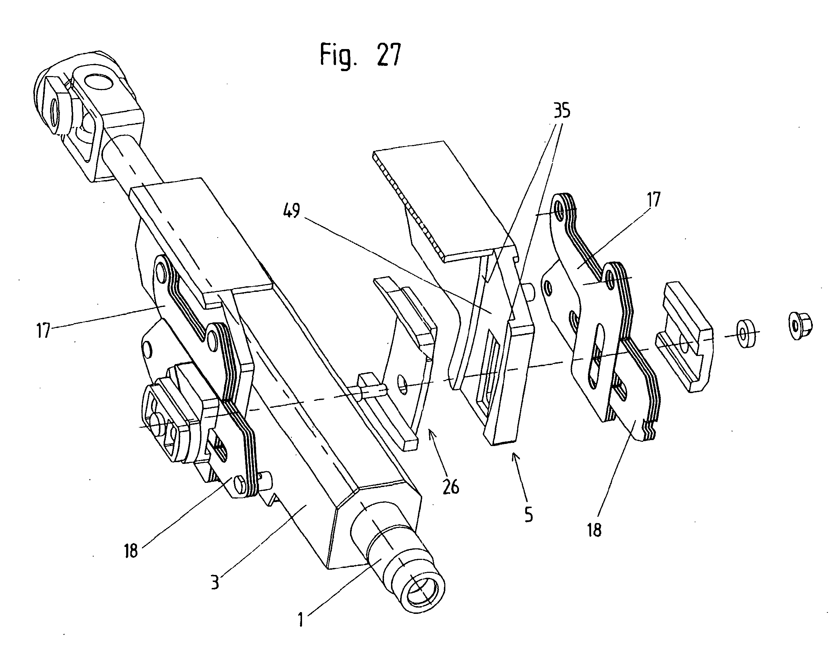

Bei dem in den Fig. 25 bis 29 dargestellten Ausführungsbeispiel der Erfindung ist das Verkantteil 26 wiederum zwischen einer der Seitenwangen 5 und der Manteleinheit 3 angeordnet. Das Verkantteil ist hier als plattenförmiges Teil ausgebildet, das in einer Vertiefung 49 an der Innenfläche der Seitenwange 5 in Richtung der Höhenverstellung verschiebbar geführt ist. Hierzu sind die Begrenzungsränder der Vertiefung und die Seitenränder des plattenförmigen Verkantteils entsprechend bogenförmig ausgebildet. Auf der der Manteleinheit 3 zugewandten Innenseite weist das Verkantteil 26 nach innen abstehende Übertragungsleisten 43, 44 auf, die einerseits den unteren Längsrand 32 der Seitenfläche 12 der Manteleinheit 3 übergreifen, andererseits an einer am oberen Ende der Seitenfläche 12 an diese anschließende Abschrägung 50 anliegen. Durch die Übertragungsleisten 43, 44 ist das Verkantteil in Richtung der Höhenverstellung unverschiebbar mit der Manteleinheit 3 verbunden, in Richtung der Längsverstellung aber gegenüber der Manteleinheit 3 verschiebbar. Bei einer Verdrehung der Manteleinheit 3 im Crashfall um eine parallel zur Längsachse des Spannbolzens 11 liegende Achse wird somit das Verkantteil 26 von der Manteleinheit über diese Übertragungsleisten 42, 44 mitgenommen, wodurch ein Drehmoment auf das Verkantteil 26 übertragen werden kann. Bei einer Verdrehung des Verkantteils 26 in der Vertiefung 49 der Manteleinheit 3 kommen die entsprechenden beiden Klemmkanten 36 mit den Seitenrändern der Vertiefung 49 in Eingriff, wobei diese Seitenränder 49 Klemmflächen 35 bilden. Die Verschiebung des Verkantteils 26 gegenüber der Seitenwange 5 wird dadurch blockiert. Auch hier bewirkt die schräge Übertragungsleiste 43 bei der Verdrehung der Manteleinheit gegenüber der Konsoleneinheit eine zusätzliche Klemmkraft der Lamellen.

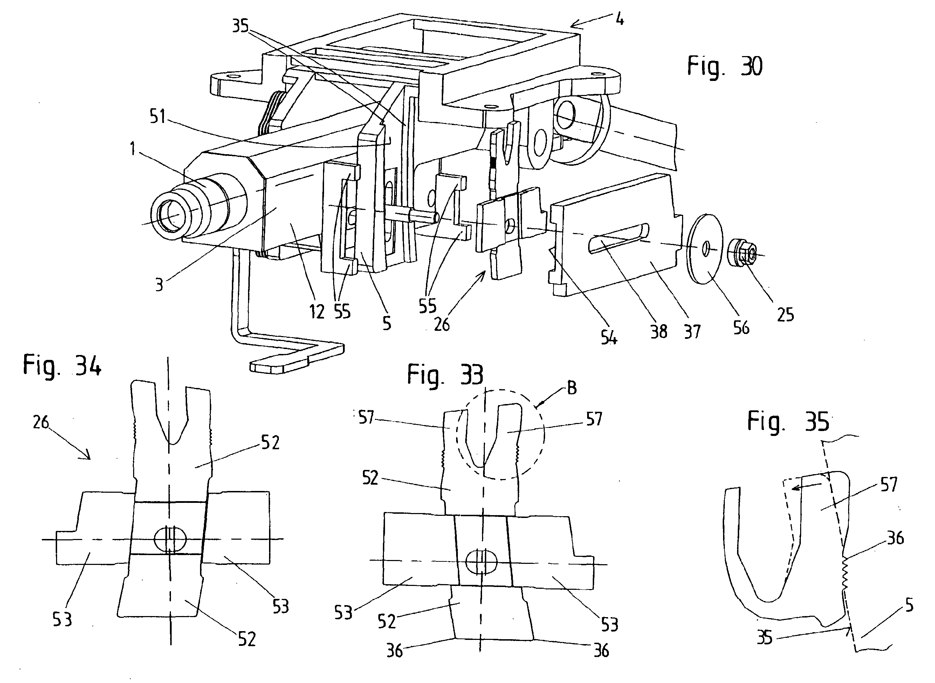

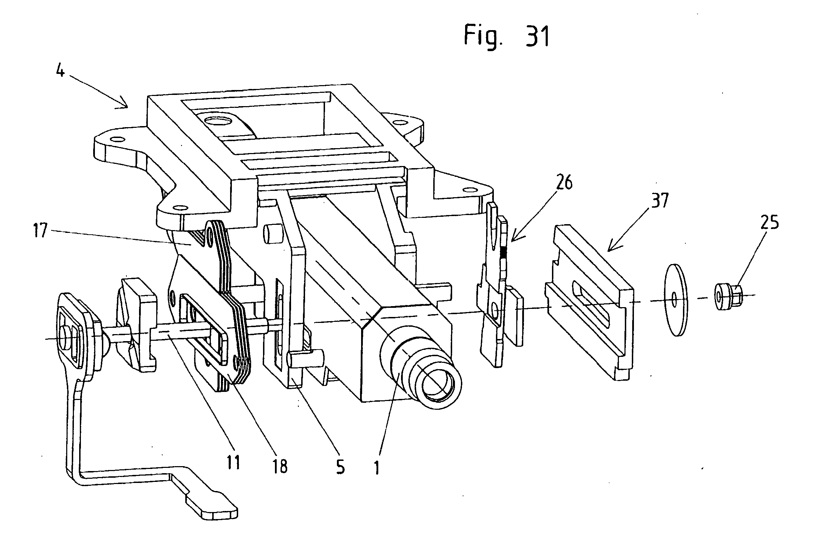

Ein fünftes Ausführungsbeispiel der Erfindung ist in den Fig. 30 bis 38 dargestellt. Bei diesem Ausführungsbeispiel sind an der Außenseite von einer der Seitenwangen 5 sich durchsetzende Pakete von Lamellen 17, 18 angeordnet, auf der Außenseite der anderen Seitenwange 5 ist ein Verkantteil 26 vorgesehen, welches in Ansicht gesehen kreuzförmig ausgebildet ist. Die vertikalen Arme des Kreuzes sind plattenförmig ausgebildet und sind in einer Vertiefung 51 an der Außenseite der Seitenwange 5, die sich in Richtung der Höhenverstellung erstreckt, in Richtung der Höhenverstellung verschiebbar geführt. Die horizontalen Arme 53 des kreuzförmigen Verkantteils 26 sind ebenfalls plattenförmig ausgebildet und liegen gegenüber den vertikalen Armen 52 weiter außen und sind in einer Vertiefung 54 in einem auf der Außenseite des Verkantteils 26 angeordneten Übertragungsteils 37 in Richtung der Längsverstellung der Lenksäule verschiebbar gelagert. An der Seitenfläche 12 der Manteleinheit 3 sind vor und hinter der Seitenwange 5 Befestigungsfortsätze 55 angebracht, welche das Übertragungsteil 37 gegen eine Verschiebung gegenüber der Manteleinheit 3 sowohl in Richtung der Höhenverstellung als auch in Richtung der Längsverstellung sichern. Im Übertragungsteil 37 ist eine vom Spannbolzen durchsetzte Langlochausnehmung 38 ausgebildet und das Übertragungsteil 37 wird mit der Spannmutter 25 und einer großen Beilagescheibe 56 auf dem Spannbolzen 11 gehalten. Durch die die Vertiefung 54 nach oben und unten begrenzenden Flanken wird das Verkantteile 26 gegen eine Verschiebung in Richtung der Höhenverstellung gegenüber der Manteleinheit 3 gesichert.

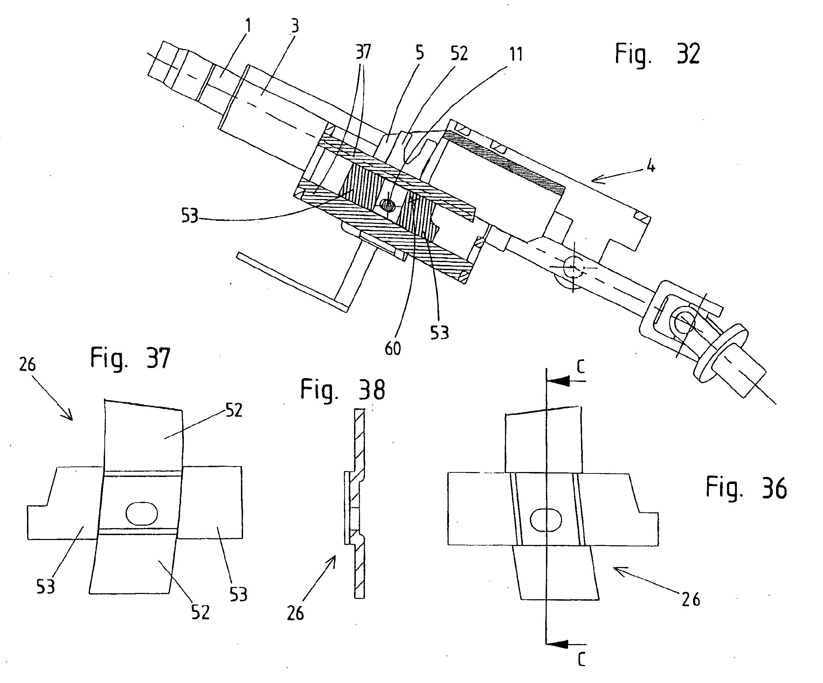

Bei einer Verdrehung der Manteleinheit 3 durch eine auf das vordere Ende der Lenksäule ausgeübte Kraft um eine im Bereich der Feststelleinheit parallel zum Spannbolzen verlaufende virtuelle Drehachse 60 (die in Fig. 32 beispielhaft eingezeichnet ist) wird das Übertragungsteil 37 und durch dieses das Verkantteil 26 ebenfalls verdreht, wodurch das Verkantteil gegenüber seiner in Richtung der Vertikalverstellung verlaufenden Führungsbahn verklemmt wird.

Der obere vertikale Arm 52 des Verkantteils weist eine von seinem oberen Rand ausgehende Ausnehmung auf, wodurch zwei gabelartige Fortsätze 57 gebildet werden. Bei einer Verdrehung des Verkantteils 26 in der Ausnehmung 51 kann - in Abhängigkeit von der Drehrichtung - einer der beiden Fortsätze 57 durch das Andrücken an die die Vertiefung 51 begrenzenden Flanken in Richtung zum anderen Fortsatz 57 abgebogen werden, wie dies in Fig. 35 strichliert dargestellt ist. Die Kraft, bei welcher dies erfolgt, kann durch eine entsprechende Dimensionierung der Fortsätze 57 eingestellt werden. Es bildet sich dadurch im Bereich des Ansatzes dieses Fortsatzes 57 eine Klemmkante 36 aus, wobei an dieser Stelle eine zusätzliche Verzahnung vorgesehen ist (daher wird eine Art "mehrfache" Klemmkante bereit gestellt). Durch diese Verzahnung wird das Verkrallen der Klemmkante 36 in der zugehörigen Klemmfläche 35 noch verstärkt, wobei die Klemmflächen von den die Vertiefung 51 in achsialer Richtung der Lenksäule gesehen vor und hinter dem Spannbolzen 11 begrenzenden Seitenflanken gebildet werden.

Eine Ausbildung des Verkantteils ohne solche Fortsätze 57 wäre ebenfalls möglich. Eine solche Ausbildung des Verkantteils ist in den Fig. 36 bis 38 dargestellt.

Die Ränder der vertikalen Arme 52 der Verkantteile gemäß den Fig. 33 bis 35 bzw. 36 bis 38 sind entsprechend der bogenförmigen Bahn der Verschwenkung der Manteleinheit gegenüber der Konsoleneinheit bei der Verstellung der Lenksäule in Richtung der Höhenverstellung im geöffneten Zustand der Feststelleinrichtung ausgebildet.

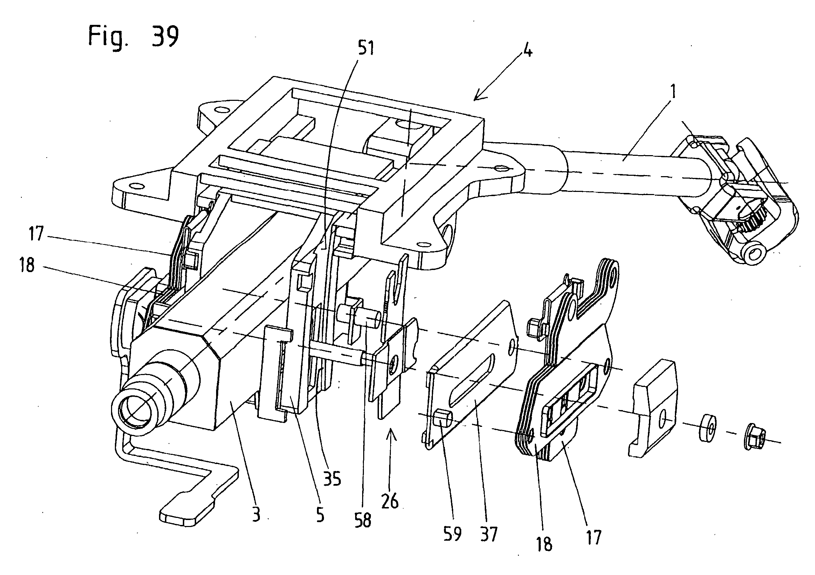

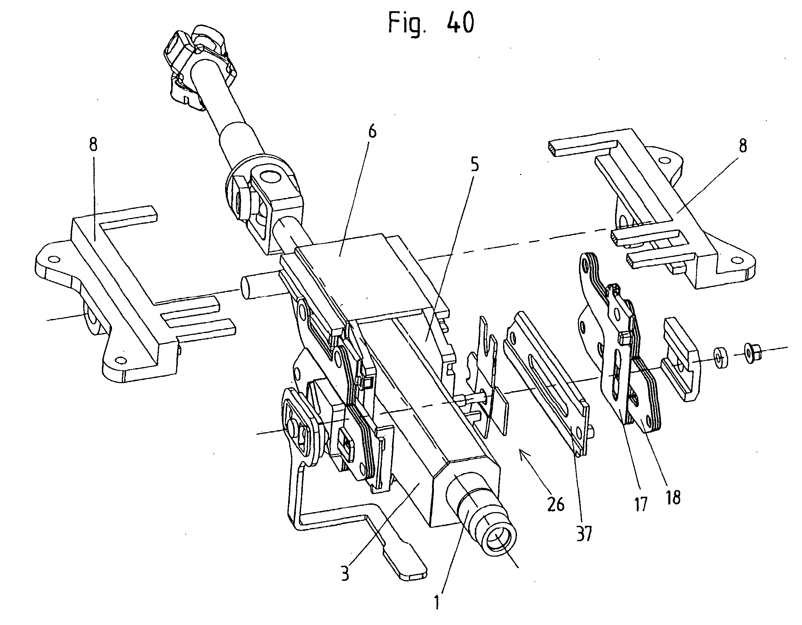

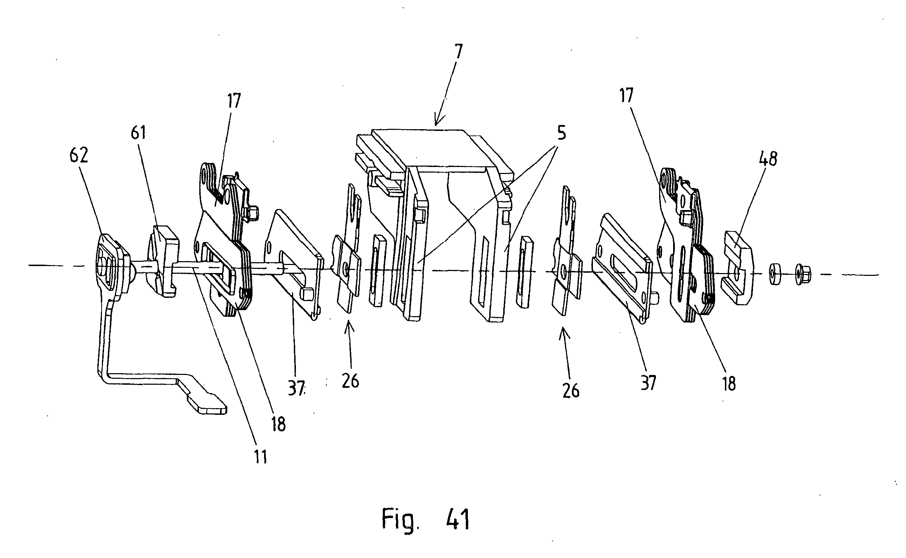

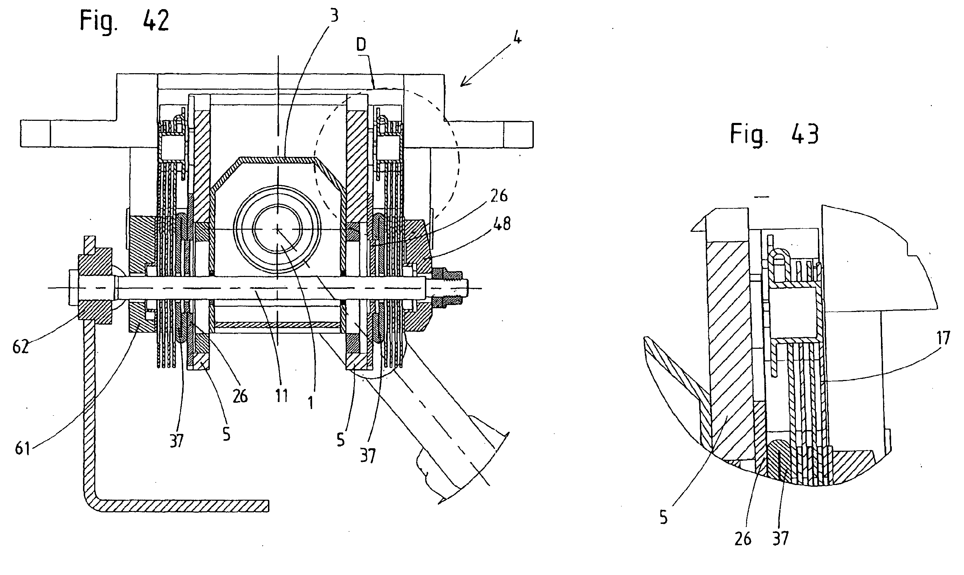

Bei dem in den Fig. 39 bis 43 dargestellten sechsten Ausführungsbeispiel der Erfindung ist ebenfalls ein kreuzförmiges Verkantteil 26 vorgesehen, das in analoger Weise wie beim zuvor beschriebenen fünften Ausführungsbeispiel der Erfindung einerseits in einer Vertiefung 51 in der Seitenwange 5 in Richtung der Höhenverstellung verschiebbar gelagert ist, andererseits in einer Vertiefung in einem Übertragungsteil 37 in Richtung der Längsverstellung verschiebbar gelagert ist. Bei diesem Ausführungsbeispiel sind aber an den Außenseiten beider Seitenwangen 5 solche Verkantteile 26 angeordnet. Weiters sind an den Außenseiten der beiden an den Außenseiten der Verkantteile 26 angeordneten Übertragungsteile 37 sich sandwichartig kreuzende Pakete von Lamellen 17, 18 angeordnet. Die die in Richtung der Höhenverstellung sich erstreckende Gegendruckplatte 61 aufweisenden Lamellen 17 sind hierbei am Trägerteil 7 der KonsolenEinheit 4 befestigt, wobei eine innerste Lamelle an der Konsoleneinheit befestigt ist und die anderen Lamellen 17 an der innersten Lamelle befestigt sind. Die die in Richtung der Längsverstellung sich erstreckenden Langlochausnehmungen 20 aufweisenden Lamellen 18 sind in Richtung der Höhenverstellung und in Richtung der Längsverstellung unverschiebbar, vorzugsweise möglichst spielfrei, mit der Manteleinheit 3 verbunden. Hierzu ist einerseits an der Manteleinheit 3 angeordneter Haltebolzen 58 vorgesehen, der rückseitige Öffnungen in den Lamellen 18 durchsetzt und von dem auch das Übertragungsteil 37 durch eine rückseitige Öffnung durchsetzt wird. Andererseits ist am Übertragungsteil 37 ein Haltebolzen 59 vorgesehen, der vordere Öffnungen in den Lamellen 18 durchsetzt. Die Lamellen 18 können hierbei in achsialer Richtung der Haltebolzen 58, 59 verschiebbar auf diesen angeordnet sein, wobei zur spielfreien Festlegung der Manteleinheit im geschlossenen Zustand der Feststelleinrichtung zumindest einer der Haltebolzen 58, 59, vorzugsweise der Haltebolzen 58 die zugeordneten Öffnungen in den Lamellen 18 möglichst spielfrei durchsetzt. In analoger Weise können auch die Lamellen 17 mit der Konsoleneinheit 4 derart verbunden sein, dass mindestens ein Haltebolzen Öffnungen in den Lamellen 17 spielfrei durchsetzt, wobei sie gegenüber einem zweiten Haltebolzen ein Spiel aufweisen können.

Das in den Fig. 39 bis 43 dargestellte Ausführungsbeispiel weist einen bezüglich einer durch die Lenkspindel 1 verlaufenden Mittelebene einen spiegelsymmetrischen Aufbau auf, wobei eine symmetrische Aufbringung der Haltekräfte ermöglicht wird. Aufgrund der beidseitigen Anordnung von Verkantteilen 25 wirkt auf jede Seitenwange 5 nur die halbe Kraft im Vergleich zu einer einseitigen Anordnung, so dass die Seitenwangen 5 weniger stabil ausgeführt sein müssen.

Unterschiedliche Modifikationen der gezeigten Ausführungsbeispiele sind denkbar und möglich, ohne den Bereich der Erfindung zu verlassen. So könnten beispielsweise die Anzahl der Lamellen 17, 18 erhöht oder verringert werden oder solche Lamellen könnten überhaupt entfallen, wenn die erforderlichen Haltekräfte auch ohne solche Lamellen aufgebracht werden können. Die Feststellelemente würden dann von den aneinander anliegenden Reibflächen der Teile gebildet werden, wobei durch das erfindungsgemäße Verkantteil eine zusätzliche Haltekraft bei einer eintretenden Verformung der Manteleinheit durch eine im Bereich deren vorderen Endes einwirkende Kraft aufgebracht wird.

Weiters wäre es auch denkbar und möglich, anstelle von reibschlüssig wirkenden Eingriffselementen im geschlossenen Zustand der Spanneinrichtung formschlüssig ineinander eingreifende Eingriffselemente vorzusehen. Solche können beispielsweise von miteinander in Eingriff bringbaren Verzahnungen gebildet werden. Insbesondere wenn diese Verzahnungen relativ klein ausgebildet sind, um einen kleinen Raster der Verstellung zu ermöglichen, können die insgesamt aufbringbaren Haltekräfte durch ein erfindungsgemäßes Verkantteil wesentlich erhöht werden.

Obwohl der Einsatz eines erfindungsgemäßen Verkantteils in den gezeigten Ausführungsbeispielen im Zusammenhang mit der Höhenverstellung, bei welcher ein solches Verkantteil als besonders vorteilhaft angesehen wird, erläutert wurde, könnte ein solches Verkantteil auch im Zusammenhang mit der Längsverstellung der Lenksäule eingesetzt werden. In diesem Fall wäre das Verkantteil in Richtung der Längsverstellung verschiebbar an der Manteleinheit oder der Seitenwange geführt und am anderen der beiden Teile gegenüber einer Verschiebung in Richtung der Längsverstellung gesichert. Bei einer eintretenden Verformung der Manteleinheit 3 unter einer Verschwenkung derselben um eine im Bereich der Feststelleinrichtung liegende virtuelle Drehachse 60 gegenüber der mindestens einen Seitenwange 5 könnte wiederum in analoger Weise eine Verschwenkung des Verkantteils gegenüber seiner Führung in Richtung der Längsverstellung erreicht werden, wodurch Klemmkanten mit Klemmflächen in Eingriff gebracht würden, so dass die Verschiebung in Richtung der Längsverstellung blockiert wird.

Prinzipiell denkbar und möglich wäre es auch, ein in Richtung der Höhenverstellung wirkendes Verkantteil an der Manteleinheit 3 bzw. einem hiermit verbundenen Teil in Richtung der Höhenverstellung verschiebbar zu lagern und an der Seitenwange 5 bzw. einen hiermit verbundenen Teil in Richtung der Höhenverstellung unverschiebbar festzulegen.

### Legende

### zu den Hinweisziffern:

- 1: Lenkspindel
- 2: Kardangelenk
- 3: Manteileinheit
- 4: Konsoleneinheit
- 5: Seitenwange
- 6: Trägerplatte
- 7: Trägerteil
- 8: Montageteil
- 9: Langloch
- 10: Langloch
- 11: Spannbolzen
- 12: Seitenfläche
- 13: Längsachse
- 14: Längsachse
- 15: vorderes Ende
- 17: Lamelle
- 18: Lamelle
- 19: Langloch
- 20: Langloch
- 21: Spannhebel
- 22: Kopf
- 23: Rolle
- 24: Vertiefung
- 25: Spannmutter
- 26: Verkantteil
- 27: Verstärkungsplatte
- 28: Verkantleiste
- 29: Verkantleiste
- 30: Eingriffselement
- 31: Führungsschlitz
- 32: Längsrand
- 33: Doppelpfeil
- 34: Doppelpfeil
- 35: Klemmfläche
- 36: Klemmkante
- 37: Übertragungsteil
- 38: Langlochausnehmung
- 39: Tragbolzen
- 40: Tragbolzen
- 41: Öffnung
- 42: Öffnung
- 43: Übertragungsleiste
- 44: Übertragungsleiste
- 45: Nut
- 46: Ausnehmung
- 47: Einsatzteil
- 48: Gegendruckplatte
- 49: Vertiefung
- 50: Abschrägung
- 51: Vertiefung
- 52: Arm
- 53: Arm
- 54: Vertiefung
- 55: Befestigungsfortsatz
- 56: Beilagscheibe
- 57: Fortsatz
- 58: Haltebolzen
- 59: Haltebolzen
- 60: Drehachse
- 61: Gegendruckplatte
- 62: Spannplatte
- 63: Achse
- 64: Lasche

## Patentansprüche

1. Verstellbare Lenksäule mit einer Lenkspindel (1), einer die Lenkspindel (1) lagernden Manteleinheit (3), einer chassisfesten Konsoleneinheit (4) mit mindestens einer Seitenwange (5), die sich seitlich der Manteleinheit (3) erstreckt und die Manteleinheit (3) trägt, und einer öffen- und schließbaren Feststelleinrichtung, in deren geschlossenem Zustand die Manteleinheit (3) mit der Konsoleneinheit (4) durch miteinander in Eingriff stehende Feststellelemente unverstellbar verbunden ist und in deren geöffnetem Zustand die Manteleinheit (3) gegenüber der Konsoleneinheit (4) zumindest in eine Verstellrichtung verstellbar ist und die einen Öffnungen in der Manteleinheit (3) und in der mindestens einen Seitenwange (5) durchsetzenden Spannbolzen (11) umfasst, **dadurch gekennzeichnet, dass** zumindest für eine Verstellrichtung mindestens ein in dieser Verstellrichtung wirkendes Verkantteil (26) vorgesehen ist, das entweder gegenüber der Seitenwange (5) oder gegenüber der Manteleinheit (3) in diese Verstellrichtung verschiebbar gelagert ist und das mit dem anderen dieser beiden Teile (5, 3) in diese Verstellrichtung unverschiebbar verbunden ist, wobei bei einer mit einer Verformung der Lenksäule einhergehenden Verdrehung zumindest des im Bereich der Seitenwange (5) liegenden Abschnitts der Manteleinheit (3) gegenüber der Seitenwange (5) um eine parallel zum Spannbolzen (11) und im Bereich der Feststelleinrichtung liegende Drehachse (60) eine Mitnahme des Verkantteils (26) von demjenigen Teil (3, 5), mit dem es in diese Verstellrichtung unverschiebbar verbunden ist, erfolgt und Klemmkanten (36) und Klemmflächen (35) einerseits des Verkantteils (26) und andererseits desjenigen Teils (3, 5), gegenüber dem das Verkantteil (26) in diese Verstellrichtung verschiebbar gelagert ist, miteinander in Eingriff gelangen, wobei die Verschiebbarkeit des Verkantteils (26) in diese Verstellrichtung gehemmt wird.

2. Verstellbare Lenksäule nach Anspruch 1, **dadurch gekennzeichnet, dass** das Verkantteil (26) ein separates Teil ist, das mit demjenigen Teil (3, 5) mit dem es in die Verstellrichtung unverschiebbar verbunden ist, über mindestens ein Eingriffselement (30) in Verbindung steht, wobei mindestens zwei voneinander beabstandete Eingriffspunkte vorhanden sind.

3. Verstellbare Lenksäule nach Anspruch 1 oder Anspruch 2, **dadurch gekennzeichnet, dass** die Klemmkanten (36) am Verkantteil (26) und die Klemmflächen (35) an demjenigen Teil (3, 5) vorgesehen sind, gegenüber dem das Verkantteil (26) in diese Verstellrichtung verschiebbar gelagert ist.

4. Verstellbare Lenksäule nach einem der Ansprüche 1 bis 3, **dadurch gekennzeichnet, dass** die Lenksäule zumindest in ihrer Höhe verstellbar ist und mindestens ein in die Richtung der Höhenverstellung wirkendes Verkantteil (26) vorgesehen ist.

5. Verstellbare Lenksäule nach einem der Ansprüche 1 bis 4, **dadurch gekennzeichnet, dass** die Lenksäule sowohl in achsialer Richtung der Lenksäule als auch in der Höhe verstellbar ist.

6. Verstellbare Lenksäule nach Anspruch 5, **dadurch gekennzeichnet, dass** das Verkantteil (26) gegenüber demjenigen Teil (3, 5), mit dem es in der Verstellrichtung, in welcher dieses Verkantteil (26) wirksam ist, unverschiebbar verbunden ist, in der anderen Verstellrichtung verschiebbar gelagert ist.

7. Verstellbare Lenksäule nach einem der Ansprüche 1 bis 6, **dadurch gekennzeichnet, dass** das Verkantteil (26) mit der Manteleinheit (3) in Richtung der Höhenverstellung unverschiebbar verbunden ist und gegenüber der Seitenwange (5) in Richtung der Höhenverstellung verschiebbar gelagert ist.

8. Verstellbare Lenksäule nach einem der Ansprüche 1 bis 7, **dadurch gekennzeichnet, dass** das Verkantteil (26) eine zentrale, vom Spannbolzen durchsetzte Öffnung aufweist.

9. Verstellbare Lenksäule nach einem der Ansprüche 1 bis 8, **dadurch gekennzeichnet, dass** das Verkantteil (26) einerseits mit der Manteleinheit (3) zusammenwirkende Übertragungsleisten (43, 44) aufweist, die in achsialer Richtung der Lenksäule verlaufende Ränder der Manteleinheit (3) übergreifen, andererseits mit der Seitenwange (5) zusammenwirkende Verkantleisten (28, 29) aufweist, die in Richtung der Höhenverstellung der Lenksäule verlaufende Ränder der Seitenwange (5) übergreifen und/oder in in Richtung der Höhenverstellung verlaufende Nuten (45) eingreifen

10. Verstellbare Lenksäule nach einem der Ansprüche 1 bis 8, **dadurch gekennzeichnet, dass** das Verkantteil zwischen der Seitenwange (5) und der Manteleinheit (3) angeordnet ist.

11. Verstellbare Lenksäule nach Anspruch 10, **dadurch gekennzeichnet, dass** das Verkantteil (26) mit der Manteleinheit (3) zusammenwirkende Übertragungsleisten (43, 44) aufweist, die in achsialer Richtung der Lenksäule verlaufende Ränder der Manteleinheit (3) übergreifen.

12. Verstellbare Lenksäule nach Anspruch 10 oder Anspruch 11, **dadurch gekennzeichnet, dass** das Verkantteil in einer Vertiefung (49) auf der Innenseite der Seitenwange (5) ge-führt ist, deren in Richtung der Höhenverstellung verlaufenden, die Vertiefung begrenzenden Flanken die mit den Klemmkanten (36) des Verkantteils (26) zusammenwirkenden Klemmflächen (35) bilden.

13. Verstellbare Lenksäule nach einem der Ansprüche 1 bis 8 **dadurch gekennzeichnet, dass** das Verkantteil (26) an der Außenseite der Seitenwange (5) angeordnet ist.

14. Verstellbare Lenksäule nach Anspruch 13, **dadurch gekennzeichnet, dass** an der Außenseite des Verkantteils (26) ein Übertragungsteil (37) angeordnet ist, mit dem das Verkantteil (26) in der Verstellrichtung unverschiebbar verbunden ist, wobei das Übertragungsteil (37) mit der Manteleinheit (3) zumindest in der Verstellrichtung unverschiebbar verbunden ist.

15. Verstellbare Lenksäule nach Anspruch 14, **dadurch gekennzeichnet, dass** das Übertragungsteil (37) in beiden Verstellrichtungen unverschiebbar mit der Manteleinheit (3) verbunden ist.

16. Verstellbare Lenksäule nach Anspruch 14 oder Anspruch 15, **dadurch gekennzeichnet, dass** zur unverschiebbaren Verbindung des Verkantteils (26) mit dem Übertragungsteil (37) in derjenigen Verstellrichtung, in der das Verkantteil wirksam ist, sich in Richtung der anderen Verstellrichtung erstreckende Übertragungsleisten (43, 44) vorgesehen sind.

17. Verstellbare Lenksäule nach einem der Ansprüche 14 bis 16, **dadurch gekennzeichnet, dass** das Verkantteil in Ansicht gesehen kreuzförmig ausgebildet ist, wobei es einerseits in Richtung der Verstellrichtung, in der es wirksam ist, sich erstreckende Arme (52) aufweist, andererseits in der anderen Verstellrichtung sich erstreckende Arme (53) aufweist.

18. Verstellbare Lenksäule nach Anspruch 17, **dadurch gekennzeichnet, dass** das Verkantteil (26) mit den in die Verstellrichtung, in der es wirksam ist, sich erstreckenden Armen (52) in einer Vertiefung (51) an der Außenseite der Seitenwange (5) in diese Verstellrichtung verschiebbar gelagert ist, wobei die diese Vertiefung (51) begrenzenden Flanken die Klemmflächen (35) bilden, die mit Klemmkanten (36) der Arme (52) zusammenwirken.

19. Verstellbare Lenksäule nach Anspruch 18, **dadurch gekennzeichnet, dass** zumindest einer der Arme einen von seinem freien Ende ausgehenden Ausschnitt aufweist, wobei Fortsätze (57) gebildet werden, die zur Ausbildung einer Klemmkante bei einer Verdrehung der Manteleinheit (3) gegenüber der Seitenwange (5) in Richtung zum anderen Fortsatz hin verbiegbar sind.

20. Verstellbare Lenksäule nach Anspruch 19, **dadurch gekennzeichnet, dass** die Fortsätze (57) im abzubiegenden Bereich mit Klemmkanten (36) bildenden Zähnen versehen sind.

21. Verstellbare Lenksäule nach einemder Ansprüche 17 bis 20, **dadurch gekennzeichnet, dass** das Verkantteil (26) mit den sich in die andere Verstellrichtung erstreckenden Armen (53) in einer Vertiefung (54) im Übertragungsteil (37) in Richtung dieser anderen Verstellrichtung verschiebbar gelagert ist, wobei die Seitenflanken dieser Vertiefung Eingriffselemente zur unverschiebbaren Verbindung des Verkantteils (26) mit dem Übertragungsteil (37) in die Verstellrichtung, in der das Verkantteil (26) wirksam ist, bilden.

22. Verstellbare Lenksäule nach Anspruch 13, **dadurch gekennzeichnet, dass** das Verkantteil (26) vor und hinter der Seitenwange (5) in Richtung zur Manteleinheit sich erstreckende Eingriffselemente (30) aufweist, die mindestens einen in Richtung der Längsverschiebung sich erstreckenden Rand der Manteleinheit (3) übergreifen und/oder in mindestens einen in Richtung der Längsverstellung sich erstreckenden Führungsschlitz (31) eingreifen.

23. Verstellbare Lenksäule nach Anspruch 22, **dadurch gekennzeichnet, dass** die Eingriffselemente (30) an Verkantleisten (28, 29) angeordnet sind, die den vorderen und hinteren Rand der Seitenwange (5) übergreifen, wobei an diesen Verkantleisten (28, 29) Klemmkanten (36) vorgesehen sind, die mit den als Klemmfläche (35) wirkenden vorderen und hinteren Rändern der Seitenwange (5) zusammenwirken.

24. Verstellbare Lenksäule nach einem der Ansprüche 1 bis 23, **dadurch gekennzeichnet, dass** die Konsoleneinheit (4) beidseitig der Manteleinheit (3) sich erstreckende Seitenwangen (5) aufweist, zwischen denen die Manteleinheit (3) geführt ist.

25. Verstellbare Lenksäule nach Anspruch 24, **dadurch gekennzeichnet, dass** der Spannbolzen (11) beide Seitenwangen (5) durch Öffnungen durchsetzt.

26. Verstellbare Lenksäule nach einem der Ansprüche 1 bis 25, **dadurch gekennzeichnet, dass** die Feststellelemente der Feststelleinrichtung zumindest teilweise von den Reibflächen von sich sandwichartig durchsetzenden Lamellen gebildet werden, wobei sowohl mit der Manteleinheit (3) verbundene Lamellen (18) als auch mit der Konsoleneinheit (4) verbundene Lamellen (17) vorgesehen sind.

27. Verstellbare Lenksäule nach einem der Ansprüche 1 bis 26, **dadurch gekennzeichnet, dass** zum gegenseitigen in Eingriff Bringen der Feststellelemente eine von einem Spannhebel (21) betätigbare Spanneinrichtung für den Spannbolzen (11) vorgesehen ist.

28. Verstellbare Lenksäule nach einem der Ansprüche 24 bis 27, **dadurch gekennzeichnet, dass** für beide Seitenwangen (5) jeweils mindestens ein Verkantteil (26) vorgesehen ist.

## Claims

1. An adjustable steering column comprising a steering spindle (1), a casing unit (3) supporting the steering spindle (1), a bracket unit (4) fixed to the chassis comprising at least one side wall (5) which extends laterally of the casing unit (3) and supports the casing unit (3), and an openable and closable locking device, in whose closed state the casing unit (3) is non-adjustably connected to the bracket unit (4) by means of locking elements in engagement with one another, and in whose opened state the casing unit (3) is adjustable relative to the bracket unit (4) at least in one adjustment direction and which comprises a clamping bolt (11) passing through openings in the casing unit (3) and in the at least one side wall (5), **characterised in that**, at least for one adjustment direction, at least one tilting part (26) acting in this adjustment direction is provided, which tilting part is mounted so as to be displaceable in this adjustment direction either relative to the side wall (5) or relative to the casing unit (3), and which tilting part is connected to the other of these two parts (5, 3) so as to be non-displaceable in this adjustment direction, wherein, in the event of torsion of at least the portion of the casing unit (3) located in the region of the side wall (5) relative to the side wall (5) about an axis of rotation. (60) located parallel to the clamping bolt (11) and in the region of the locking device, the said torsion being accompanied by deformation of the steering column, entraining of the tilting part (26) is effected by the part (3, 5) to which it is connected so as to be non-displaceable in this adjustment direction, and clamping edges (36) and clamping surfaces (35) of the tilting part (26), on the one hand, and of the part (3, 5) relative to which the tilting part (26) is mounted so as to be displaceable in this adjustment direction, on the other hand, come into engagement with one another, whereupon the displaceability of the tilting part (26) is inhibited in this adjustment direction.

2. An adjustable steering column according to Claim 1, **characterised in that** the tilting part (26) is a separate part which is connected via at least one engagement element (30) to the part (3, 5) to which it is connected so as to be non-displaceable in the adjustment direction, at least two engagement points being present, spaced from one another.

3. An adjustable steering column according to Claim 1 or Claim 2, **characterised in that** the clamping edges (36) are provided on the tilting part (26) and the clamping surfaces (35) on the part (3, 5) relative to which the tilting part (26) is mounted so as to be displaceable in this adjustment direction.

4. An adjustable steering column according to one of Claims 1 to 3, **characterised in that** the steering column is adjustable at least in its height and at least one tilting part (26) is provided, acting in the direction of the height adjustment.

5. An adjustable steering column according to one of Claims 1 to 4, **characterised in that** the steering column is adjustable both in the axial direction of the steering column and also in the height.

6. An adjustable steering column according to Claim 5, **characterised in that** the tilting part (26) is mounted so as to be displaceable, relative to the part (3, 5) to which is it connected so as to be non-displaceable in the adjustment direction in which this tilting part (26) is operative, in the other adjustment direction.

7. An adjustable steering column according to one of Claims 1 to 6, **characterised in that** the tilting part (26) is connected to the casing unit (3) so as to be non-displaceable in the direction of the height adjustment and is mounted so as to be displaceable relative to the side wall (5) in the direction of the height adjustment.

8. An adjustable steering column according to one of Claims 1 to 7, **characterised in that** the tilting part (26) has a central opening through which the clamping bolt passes.

9. An adjustable steering column according to one of Claims 1 to 8, **characterised in that** the tilting part (26) has, on the one hand, transmission strips (43, 44) cooperating with the casing unit (3), which engage over margins of the casing unit (3) extending in the axial direction of the steering column, and, on the other hand, tilting strips (28, 29) cooperating with the side wall (5), which engage over margins of the side wall (5) extending in the direction of the height adjustment of the steering column and/or engage into grooves (45) extending in the direction of the height adjustment.

10. An adjustable steering column according to one of Claims 1 to 8, **characterised in that** the tilting part is arranged between the side wall (5) and the casing unit (3).

11. An adjustable steering column according to Claim 10, **characterised in that** the tilting part (26) has transmission strips (43, 44) cooperating with the casing unit (3), which engage over margins of the casing unit (3) extending in the axial direction of the steering column.

12. An adjustable steering column according to Claim 10 or Claim 11, **characterised in that** the tilting part is guided in a depression (49) on the inner side of the side wall (5), of which the flanks extending in the direction of the height adjustment and defining the depression form the clamping surfaces (35) cooperating with the clamping edges (36) of the tilting part (26).

13. An adjustable steering column according to one of Claims 1 to 8, **characterised in that** the tilting part (26) is arranged on the outer side of the side wall (5).

14. An adjustable steering column according to Claim 13, **characterised in that** a transmission part (37) is arranged on the outer side of the tilting part (26), to which the tilting part (26) is connected so as to be non-displaceable in the adjustment direction, the transmission part (37) being connected to the casing unit (3) so as to be non-displaceable at least in the adjustment direction.

15. An adjustable steering column according to Claim 14, **characterised in that** the transmission part (37) is connected to the casing unit (3) so as to be non-displaceable in both adjustment directions.

16. An adjustable steering column according to Claim 14 or Claim 15, **characterised in that**, for the non-displaceable connection of the tilting part (26) to the transmission part (37) in the adjustment direction in which the tilting part is operative, transmission strips (43, 44) are provided which extend in the direction of the other adjustment direction.

17. An adjustable steering column according to one of Claims 14 to 16, **characterised in that** the tilting part is designed so as to be cruciform, viewed in section, wherein it has arms (52) extending in the direction of the adjustment direction in which it is operative, on the one hand, and arms (53) extending in the other adjustment direction, on the other hand.

18. An adjustable steering column according to Claim 17, **characterised in that** the tilting part (26) with the arms (52) extending in the adjustment direction in which it is operative is mounted in a depression (51) on the outer side of the side wall (5) so as to be displaceable in this adjustment direction, wherein the flanks defining this depression (51) form the clamping surfaces (35) which cooperate with clamping edges (36) of the arms (52).

19. An adjustable steering column according to Claim 18, **characterised in that** at least one of the arms has a portion projecting from its free end, extensions (57) being formed which, to form a clamping edge in the case of torsion of the casing unit (3) relative to the side wall (5), are bendable in the direction towards the other extension.

20. An adjustable steering column according to Claim 19, **characterised in that** the extensions (57) in the region to be deflected are provided with teeth forming clamping edges (36).

21. An adjustable steering column according to one of Claims 17 to 20, **characterised in that** the tilting part (26) with the arms (53) extending in the other adjustment direction is mounted in a depression (54) in the transmission part (37) so as to be displaceable in the direction of this other adjustment direction, wherein the side flanks of this depression form engagement elements for the non-displaceable connection of the tilting part (26) to the transmission part (37) in the adjustment direction in which the tilting part (26) is operative.

22. An adjustable steering column according to Claim 13, **characterised in that** the tilting part (26) has engagement elements (30) in front of and behind the side wall (5), extending in the direction towards the casing unit, which engage over at least one margin of the casing unit (3) extending in the direction of the longitudinal displacement and/or engage into at least one guide slot (31) extending in the direction of the longitudinal adjustment.

23. An adjustable steering column according to Claim 22, **characterised in that** the engagement elements (30) are arranged on tilting strips (28, 29) which engage over the front and rear margin of the side wall (5), clamping edges (36) being provided on these tilting strips (28, 29) which cooperate with the front and rear margins of the side wall (5) acting as clamping surface (35).

24. An adjustable steering column according to one of Claims 1 to 23, **characterised in that** the bracket unit (4) has side walls (5) extending on both sides of the casing unit (3), between which the casing unit (3) is guided.

25. An adjustable steering column according to Claim 24, **characterised in that** the clamping bolt (11) passes through both side walls (5) through openings.

26. An adjustable steering column according to one of Claims 1 to 25, **characterised in that** the locking elements of the locking device are formed at least in part by the friction surfaces of plates sandwiched together, wherein plates (18) connected to the casing unit (3) as well as plates (17) connected to the bracket unit (4) are provided.

27. An adjustable steering column according to one of Claims 1 to 26, **characterised in that** a clamping device operable by a clamping lever (21) is provided for the clamping bolt (11) to bring the locking elements into mutual engagement.

28. An adjustable steering column according to one of Claims 24 to 27, **characterised in that** at least one tilting part (26) is provided for each of the two side walls (5).

## Revendications

1. Colonne de direction réglable munie d'un arbre de direction (1), d'une enveloppe (3) logeant l'arbre de direction (1), d'une console (4) fixée au châssis et munie d'au moins une joue latérale (5) qui s'étend à côté de l'enveloppe (3) et la porte, ainsi que d'un dispositif de fixation pouvant être ouvert et fermé, dont l'état fermé duquel relie l'enveloppe (3) à la console (4) sans déplacement possible par des éléments de fixation en prise les uns avec les autres et dont l'état ouvert permet de régler l'enveloppe (3) par rapport à la console (4) au moins dans une direction de réglage, et qui comprend un boulon de serrage (11) traversant des ouvertures dans l'enveloppe (3) et au moins une joue latérale (5),
**caractérisée en ce qu'**
au moins dans une direction de réglage au moins un mors (26) est prévu pour agir dans cette direction sans déplacement possible dans cette direction soit en face de la joue latérale (5), soit en face de l'enveloppe (3) et relié à l'autre de ces deux pièces (5, 3) de manière à ne pas pouvoir se déplacer dans cette direction, le mors (26) étant emporté par la pièce (3, 5) à laquelle il est relié dans cette direction de réglage sans déplacement possible, et lorsqu'au moins la partie de l'enveloppe (3) se trouvant dans la zone de la joue (5) subit une torsion due à une déformation de la colonne de direction par rapport à la joue latérale (5) autour d'un axe de rotation (60) parallèle au boulon de serrage (11) et se trouvant dans la zone du dispositif de fixation, le mors (26) est entraîné avec la pièce (3, 5) à laquelle il est relié dans cette direction de déplacement, et des arêtes de serrage (36) ainsi que des surfaces de serrage (35) d'un côté du mors (26) et de l'autre côté de la pièce correspondante (3, 5) en face de laquelle le mors (26) peut être déplacé dans cette direction de réglage, s'engagent les unes dans les autres sachant que la capacité de déplacement du mors (26) est bloquée dans cette direction de réglage.

2. Colonne de direction réglable selon la revendication 1,
**caractérisée en ce que**
le mors (26) est une pièce séparée reliée par au moins un élément d'engrènement (30) à la pièce (3, 5) à laquelle il est relié sans déplacement possible dans la direction de réglage, avec au moins deux points d'engagement écartés l'un de l'autre.

3. Colonne de direction réglable selon la revendication 1 ou 2,
**caractérisée en ce qu'**
on a prévu les arêtes de serrage (36) sur le mors (26) et les surfaces de serrage (35) sur la pièce (3, 5) face à laquelle le mors (26) est placé avec déplacement possible dans cette direction de réglage.

4. Colonne de direction réglable selon l'une quelconque des revendications 1 à 3,
**caractérisée en ce que**
la colonne de direction est réglable au moins dans sa hauteur, et au moins un mors (26) agit dans la direction du réglage en hauteur.

5. Colonne de direction réglable selon l'une quelconque des revendications 1 à 4,
**caractérisée en ce que**
la colonne de direction peut être réglée à la fois dans sa direction axiale et dans sa hauteur.

6. Colonne de direction réglable selon la revendication 5,
**caractérisée en ce qu'**
en face de la pièce (3, 5) avec laquelle il est relié sans déplacement possible dans la direction de réglage dans laquelle il est actif, le mors (26) est placé avec déplacement possible dans l'autre direction de réglage.

7. Colonne de direction réglable selon l'une quelconque des revendications 1 à 6,
**caractérisée en ce que**
le mors (26) est relié sans déplacement possible à l'enveloppe (3) dans la direction du réglage en hauteur et est positionné avec déplacement possible par rapport à la joue latérale (5) dans la direction du réglage en hauteur.

8. Colonne de direction réglable selon l'une quelconque des revendications 1 à 7,
**caractérisée en ce que**
le mors (26) présente une ouverture centrale traversée par le boulon de serrage.

9. Colonne de direction réglable selon l'une quelconque des revendications 1 à 8,
**caractérisée en ce que**
le mors (26) présente d'une part des barres de transfert (43, 44) coopérant avec l'enveloppe (3) et en prise avec des bords de l'enveloppe (3) s'étendant dans la direction axiale de la colonne de direction, et d'autre part des barrettes (28, 29) coopérant avec la joue latérale (5), en prise avec des bords de la joue latérale (5) s'étendant dans la direction du réglage en hauteur de la colonne de direction et/ou entrant dans des rainures (45) s'étendant dans la direction du réglage en hauteur.

10. Colonne de direction réglable selon l'une quelconque des revendications 1 à 8,
**caractérisée en ce que**
le mors est placé entre la joue latérale (5) et l'enveloppe (3).

11. Colonne de direction réglable selon la revendication 10,
**caractérisée en ce que**
le mors (26) présente des barres de transfert (43, 44) coopérant avec l'enveloppe (3) et en prise avec les bords de l'enveloppe (3) s'étendant dans la direction axiale de la colonne de direction.

12. Colonne de direction réglable selon la revendication 10 ou 11,
**caractérisée en ce que**
le mors est guidé dans une cavité (49) sur la face intérieure de la joue latérale (5) dont les brides limitant la cavité et s'étendant dans la direction du réglage en hauteur forment des surfaces de serrage (35) coopérant avec les arêtes de serrage (36) du mors (26).

13. Colonne de direction réglable selon l'une quelconque des revendications 1 à 8,
**caractérisée en ce que**
le mors (26) est disposé sur la face extérieure de la joue latérale (5).

14. Colonne de direction réglable selon la revendication 13,
**caractérisée en ce qu'**
une pièce de transfert (37) à laquelle est reliée le mors (26) sans déplacement possible dans la direction de réglage est disposée sur la face extérieure du mors (26), la pièce de transfert (37) étant reliée à l'enveloppe (3) sans déplacement possible au moins dans la direction de réglage.

15. Colonne de direction réglable selon la revendication 14,
**caractérisée en ce que**
la pièce de transfert (37) est reliée à l'enveloppe (3) sans déplacement possible dans les deux directions de réglage.

16. Colonne de direction réglable selon la revendication 14 ou 15, **caractérisée en ce que**
pour relier sans déplacement possible le mors (26) à la pièce de transfert (37) dans la direction de réglage dans laquelle le mors est actif, des barres de transfert (43, 44) s'étendent dans l'autre direction de réglage.

17. Colonne de direction réglable selon l'une quelconque des revendications 14 à 16,
**caractérisée en ce que**
le mors est en forme de croix dans une vue de dessus et présente d'une part un bras (52) s'étendant dans la direction de réglage dans laquelle il est actif et d'autre part un bras (53) s'étendant dans l'autre direction de réglage.

18. Colonne de direction réglable selon la revendication 17,
**caractérisée en ce que**
le mors (26) est placé avec déplacement possible dans la direction de réglage dans laquelle il est actif avec les bras (52) s'étendant dans cette direction de réglage dans un évidement (51) sur la face extérieure de la joue latérale (5), et les flancs limitant cette cavité (51) forment les surfaces de serrage (35) qui coopèrent avec les arêtes de serrage (36) des bras (52).

19. Colonne de direction réglable selon la revendication 18,
**caractérisée en ce qu'**
au moins un des bras présente une découpe sortant de son extrémité libre, des saillies (57) étant formées et pouvant être pliées en direction de l'autre saillie pour former une arête de serrage lors d'une torsion de l'enveloppe (3) par rapport à la joue latérale (5).

20. Colonne de direction réglable selon la revendication 19,
**caractérisée en ce que**
les saillies (57) sont munies de dents formant des arêtes de serrage (36) dans la zone à plier.

21. Colonne de direction réglable selon l'une quelconque des revendications 17 à 20,
**caractérisée en ce que**
le mors (26) avec les bras (53) s'étendant dans l'autre direction de réglage est placé dans un évidement (54) dans la pièce de transfert (37) avec déplacement possible dans la direction de cette autre direction de réglage, les flancs latéraux de cette cavité formant des éléments d'engrènement pour relier sans déplacement possible le mors (26) à la pièce de transfert (37) dans la direction de réglage dans laquelle le mors (26) est actif.

22. Colonne de direction réglable selon la revendication 13,
**caractérisée en ce que**
le mors (26) présente devant et derrière la joue latérale (5) des éléments d'engrènement (30) s'étendant dans la direction de l'enveloppe et en prise avec au moins un bord de l'enveloppe (3) s'étendant dans la direction du déplacement longitudinal et/ou dans au moins une fente de guidage (31) s'étendant dans la direction du déplacement longitudinal.

23. Colonne de direction réglable selon la revendication 22,
**caractérisée en ce que**
les éléments d'engrènement (30) sont disposés sur des barres (28, 29) en prise avec les bords avant et arrière de la joue latérale (5), et des arêtes de serrage (36) coopérant avec les bords avant et arrière de la joue latérale (5) servant de surface de serrage (35) sont prévues sur ces barrettes coincées (28, 29).

24. Colonne de direction réglable selon l'une quelconque des revendications 1 à 23,
**caractérisée en ce que**
la console (4) présente des joues latérales (5) s'étendant des deux côtés de l'enveloppe (3) et entre lesquelles est guidée l'enveloppe (3).

25. Colonne de direction réglable selon la revendication 24,
**caractérisée en ce que**
le boulon de serrage (11) traverse les deux joues latérales (5) par des ouvertures.

26. Colonne de direction réglable selon l'une quelconque des revendications 1 à 25,
**caractérisée en ce que**
les éléments de fixation du dispositif de fixation sont formés au moins partiellement par les surfaces de frottement de lamelles placées en forme de sandwich, des lamelles (18) reliées à l'enveloppe (3) étant prévues tout comme des lamelles (17) reliées à la console (4).

27. Colonne de direction réglable selon l'une quelconque des revendications 1 à 26,
**caractérisée en ce qu'**
un dispositif de serrage pouvant être actionné par un levier de serrage (21) est prévu pour le boulon de serrage (11) afin de mettre réciproquement en prise les éléments de fixation.

28. Colonne de direction réglable selon l'une quelconque des revendications 24 à 27,
**caractérisée en ce qu'**
au moins un mors (26) est chaque fois prévu pour les deux joues latérales (5).
